(19) Europäisches Patentamt
European Patent Office
Office européen des brevets

(11) EP 1 715 365 A1

(12) **EUROPEAN PATENT APPLICATION**
published in accordance with Art. 158(3) EPC

(43) Date of publication:
**25.10.2006 Bulletin 2006/43**

(21) Application number: **05703493.6**

(22) Date of filing: **12.01.2005**

(51) Int Cl.:
***G02B 5/30*** *(2006.01)*

(86) International application number:
**PCT/JP2005/000254**

(87) International publication number:
**WO 2005/078486 (25.08.2005 Gazette 2005/34)**

(84) Designated Contracting States:
**AT BE BG CH CY CZ DE DK EE ES FI FR GB GR HU IE IS IT LI LT LU MC NL PL PT RO SE SI SK TR**

(30) Priority: **13.02.2004 JP 2004037166**

(71) Applicant: **JSR Corporation**
**Tokyo 104-0045 (JP)**

(72) Inventors:
- **SUGIYAMA, Naoki,**
**JSR CORPORATION**
**Tokyo 104-0045 (JP)**
- **USHINO, Takuhiro,**
**JSR CORPORATION**
**Tokyo 104-0045 (JP)**
- **HASHIGUCHI, Yuichi,**
**JSR CORPORATION**
**Tokyo 104-0045 (JP)**
- **SEKIGUCHI, Masayuki,**
**JSR CORPORATION**
**Tokyo 104-0045 (JP)**

(74) Representative: **TBK-Patent**
**Bavariaring 4-6**
**80336 München (DE)**

# (54) PHASE DIFFERENCE FILM, POLARIZING PLATE, AND LIQUID CRYSTAL DISPLAY ELEMENT USING THEM

(57) There is provided by the invention a retardation film stably exhibiting excellent optical properties over a long period of time. The retardation film of the invention is a retardation film comprising (A) a cycloolefin resin and (B) inorganic particles which have a longer diameter and a shorter diameter and exhibit shape anisotropy, a refractive index of which in the longer diameter direction is larger than an average refractive index of which in the direction crossing the longer diameter direction at right angles and which exhibit birefringence, wherein the inorganic particles (B) are orientated and the retardation film has a difference in refractive index between the film plane direction and the film thickness direction.



Printed by Jouve, 75001 PARIS (FR)

## Description

### TECHINICAL FIELD

The present invention relates to a retardation film, which comprises a transparent film of a cycloolefin resin and particles having optical anisotropy contained in the transparent film and which exhibits phase difference because of the particles having been orientated by stretching the film, a polarizing plate having the retardation film, and a liquid crystal display device using them.

### BACKGROUND ART

In recent years, liquid crystal display devices (LCD) have been widely employed for notebook personal computers, monitors for personal computers, car navigation systems, TV monitors, etc. From the beginning of development, it has been pointed that the liquid crystal display devices are inferior to cathode-ray tubes (CRT) in property of angle of visibility, and in order to improve the property of angle of visibility, various studies have been heretofore made.

As an example of the method to improve the property of angle of visibility, there is a method of using a stretched film obtained by subjecting a transparent film such as a film of polycarbonate or a cycloolefin resin to monoaxial stretching or biaxial stretching. In the case where a transparent film composed of polycarbonate is used in this method, appearance of phase difference is relatively good, but because of large photoelasticity constant, the phase difference is liable to be changed by the usage environment, and non-uniformity of phase difference is liable to occur. On the other hand, in the case where a transparent film composed of a cycloolefin resin is used, appearance of phase difference is poor, and if an attempt to obtain large phase difference is made, non-uniformity of phase difference is liable to occur.

In order to improve property of angle of visibility of TN type LCD that is the main stream of liquid crystal display devices, angle dependence of every liquid crystal molecule that has been hybrid-orientated in the liquid crystal cell when the voltage is in the ON state (black is displayed) needs to be compensated. On this account, there have been proposed a retardation film wherein a disc-shaped liquid crystal compound capable of becoming a negative compensating film has been hybrid-orientated and a retardation film wherein a stick-shaped liquid crystal compound has been hybrid-orientated, and it is known that by the use of these retardation films, the property of angle of visibility in three directions of the right and left directions and the upper and lower directions can be improved.

In case of the films using these liquid crystal compounds, however, the property of angle of visibility is sometimes changed when they are used for a long period of time, in view of stability of the liquid crystal compounds themselves or stability of hybrid orientation of the liquid crystal compounds.

In the VA system that has recently become the main stream of TV monitors, the liquid crystal layer is perpendicularly orientated when the voltage is in the OFF state and thereby displays black, so that change of phase difference due to the angle of visibility is large.

Accordingly, optical compensating films for liquid crystal display devices, which are adaptable to liquid crystals of various types and the property of angle of visibility, etc. of which can be favorably maintained even when they are used for a long period of time, have been desired.

On the other hand, an anti-reflection film formed from a composition containing needle-like particles is known (patent document 1 and patent document 2). This anti-reflection film has been improved in antistatic properties, mar resistance and transparency, but birefringence of the film is not disclosed at all.

In a patent document 3, an optical resin material containing a transparent high-molecular resin and an inorganic substance exhibiting birefringence is disclosed, and as the inorganic substance, a needle-like crystalline mineral is exemplified. This optical resin material, however, is an optical material of non-birefringence in which an inorganic substance exhibiting birefringence is orientated so as to cancel birefringence derived from the high-molecular resin.

In the patent document 3, it is not disclosed that a difference in refractive index between the film plane direction and the film thickness direction is made by a difference in refractive index of an inorganic substance exhibiting birefringence between the longer diameter direction and the direction crossing the longer diameter direction at right angles.

Patent document 1: Japanese Patent Laid-Open Publication No. 245202/1992
Patent document 2: Japanese Patent Laid-Open Publication No. 355936/2002
Patent document 3: Japanese Patent Laid-Open Publication No. 293116/1999

### DISCLOSURE OF THE INVENTION

### PROBLEM TO BE SOLVED BY THE INVENTION

It is an object of the present invention to provide a retardation film stably exhibiting excellent optical properties over a long period of time, a polarizing plate and a liquid crystal display device using them.

## MEANS TO SOLVE THE PROBLEM

In order to solve the above problem, the present inventor has earnestly studied, and as a result, he has found that a film which comprises (A) a cycloolefin resin and (B) inorganic particles having both of shape anisotropy and birefringence and which is obtained by orientating the inorganic particles (B) exhibits excellent birefringence. Based on the finding, the present invention has been accomplished.
The retardation film of the present invention is a retardation film comprising:

(A) a cycloolefin resin, and
(B) inorganic particles which have a longer diameter and a shorter diameter and exhibit shape anisotropy, which have a refractive index of which in the longer diameter direction is larger than an average refractive index of which in the direction crossing the longer diameter direction at right angles and which exhibit birefringence,

wherein the inorganic particles (B) are orientated, and the retardation film has a difference in refractive index between the film plane direction and the film thickness direction.
In the retardation film of the invention, a phase difference (R0) in the film in-plane direction is preferably in the range of 10 to 1000 nm, and a phase difference (Rth) in the film thickness direction is preferably in the range of 10 to 1000 nm.
It is preferable that the inorganic particles (B) have crystalline property and have an average longer diameter of not more than 2 $\mu$m. It is also preferable that the inorganic particles (B) have crystalline property and have a ratio (L/D) of a longer diameter (L) to a shorter diameter (D) of not less than 2, and the longer diameter direction of the inorganic particles (B) is arranged in substantially parallel to the film plane of the retardation film.
The retardation film of the invention is preferably produced by stretching. The retardation film of the invention may have a transparent conductive film.
The polarizing plate of the present invention is a polarizing plate obtained by laminating a protective film (a), a polarizing film (b) and a protective film (c) one upon another in this order, wherein the protective film (a) and/or the protective film (c) is the above-mentioned retardation film. The polarizing plate may have a transparent conductive film.
The liquid crystal display device of the present invention has the retardation film or the polarizing plate.

## EFFECT OF THE INVENTION

The retardation film and the polarizing plate according to the invention not only exhibit excellent birefringence (phase difference) and transparency stably over a long period of time but also have excellent property of angle of visibility.

## BEST MODE FOR CARRYING OUT THE INVENTION

The retardation film, the polarizing plate and the liquid crystal display device according to the invention are described in detail hereinafter.

### Retardation film

The retardation film of the invention is a transparent film comprising (A) a cycloolefin resin and (B) specific inorganic particles having shape anisotropy and refractive index anisotropy, and in this film, the inorganic particles (B) are orientated. The retardation film can be obtained by, for example, stretching. By producing the retardation film in this manner, not only molecules of the cycloolefin resin but also the inorganic particles (B) are orientated to make a difference in refractive index between the film plane direction and the film thickness direction.

### (A) Cycloolefin resin

Examples of the cycloolefin resins (A) for use in the invention include the following (co)polymers:

(1) a ring-opened polymer of a polycyclic monomer represented by the following formula (1),
(2) a ring-opened copolymer of a polycyclic monomer represented by the following formula (1) and a copolymerizable monomer,
(3) a hydrogenated (co)polymer of the ring-opened (co)polymer (1) or (2),
(4) a (co)polymer obtained by cyclizing the ring-opened (co)polymer (1) or (2) by Friedel-Crafts reaction and then hydrogenating the reaction product,
(5) a saturated copolymer of a polycyclic monomer represented by the following formula (1) and an unsaturated

double bond-containing compound,

(6) an addition (co)polymer of one or more monomers selected from a polycyclic monomer represented by the following formula (1), a vinyl cyclic hydrocarbon monomer and a cyclopentadiene monomer, or its hydrogenated (co)polymer, and

(7) an alternating copolymer of a polycyclic monomer represented by the following formula (1) and an acrylate.

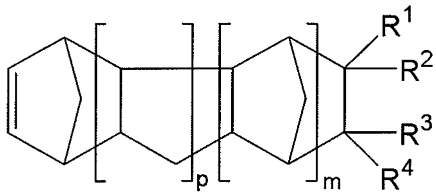

(1)

In the above formula, $R^1$ to $R^4$ are each a hydrogen atom, a halogen atom, a hydrocarbon group of 1 to 30 carbon atoms or another monovalent organic group and may be the same or different, $R^1$ and $R^2$ or $R^3$ and $R^4$ may be united to form a divalent hydrocarbon group, $R^1$ or $R^2$ and $R^3$ or $R^4$ may be bonded to each other to form a monocyclic or polycyclic structure, m is 0 or a positive integer, and p is 0 or a positive integer.

<u>Ring-opened (co)polymer</u>

<u>Polycyclic monomer</u>

Examples of the polycyclic monomers include the following compounds, but the present invention is not limited to these examples;

bicyclo[2.2.1]hept-2-ene,
tricyclo[4.3.0.$1^{2,5}$]-8-decene,
tricyclo[4.4.0.$1^{2,5}$]-3-undecene,
tetracyclo[4.4.0.$1^{2,5}$.$1^{7,10}$]-3-dodecene,
pentacyclo[6.5.1.$1^{3,6}$.$0^{2,7}$.$0^{9,13}$]-4-pentadecene,
5-methylbicyclo[2.2.1]hept-2-ene,
5-ethylbicyclo[2.2.1]hept-2-ene,
5-methoxycarbonylbicyclo[2.2.1]hept-2-ene,
5-methyl-5-methoxycarbonylbicyclo[2.2.1]hept-2-ene,
5-cyanobicyclo[2.2.1]hept-2-ene,
8-methoxycarbonyltetracyclo[4.4.0.$1^{2,5}$.$1^{7,10}$]-3-dodecene,
8-ethoxycarbonyltetracyclo[4.4.0.$1^{2,5}$.$1^{7,10}$]-3-dodecene,
8-n-propoxycarbonyltetracyclo[4.4.0.$1^{2,5}$.$1^{7,10}$]-3-dodecene,
8-isopropoxycarbonyltetracyclo[4.4.0.$1^{2,5}$.$1^{7,10}$]-3-dodecene,
8-n-butoxycarbonyltetracyclo[4.4.0.$1^{2,5}$.$1^{7,10}$]-3-dodecene,
8-methyl-8-methoxycarbonyltetracyclo[4.4.0.$1^{2,5}$.$1^{7,10}$]-3-dodecene,
8-methyl-8-ethoxycarbonyltetracyclo[4.4.0.$1^{2,5}$.$1^{7,10}$]-3-dodecene,
8-methyl-8-n-propoxycarbonyltetracyclo[4.4.0.$1^{2,5}$.$1^{7,10}$]-3-dodecene,
8-methyl-8-isopropoxycarbonyltetracyclo[4.4.0.$1^{2,5}$.$1^{7,10}$]-3-dodecene,
8-methyl-8-n-butoxycarbonyltetracyclo[4.4.0.$1^{2,5}$.$1^{7,10}$]-3-dodecene,
5-ethylidenebicyclo[2.2.1]hept-2-ene,
8-ethylidenetetracyclo[4.4.0.$1^{2,5}$.$1^{7,10}$]-3-dodecene,
5-phenylbicyclo[2.2.1]hept-2-ene,
8-phenyltetracyclo[4.4.0.$1^{2,5}$.$1^{7,10}$]-3-dodecene,
5-fluorobicyclo[2.2.1]hept-2-ene,
5-fluoromethylbicyclo[2.2.1]hept-2-ene,
5-trifluoromethylbicyclo[2.2.1]hept-2-ene,
5-pentafluoroethylbicyclo[2.2.1]hept-2-ene,
5,5-difluorobicyclo[2.2.1]hept-2-ene,
5,6-difluorobicyclo[2.2.1]hept-2-ene,
5,5-bis(trifluoromethyl)bicyclo[2.2.1]hept-2-ene,
5,6-bis(trifluoromethyl)bicyclo[2.2.1]hept-2-ene,

5-methyl-5-trifluoromethylbicyclo[2.2.1]hept-2-ene,
5,5,6-trifluorobicyclo[2.2.1]hept-2-ene,
5,5,6-tris(fluoromethyl)bicyclo[2.2.1]hept-2-ene,
5,5,6,6-tetrafluorobicyclo[2.2.1]hept-2-ene,
5,5,6,6-tetrakis(trifluoromethyl)bicyclo[2.2.1]hept-2-ene,
5,5-difluoro-6,6-bis(trifluoromethyl)bicyclo[2.2.1]hept-2-ene,
5,6-difluoro-5,6-bis(trifluoromethyl)bicyclo[2.2.1]hept-2-ene,
5,5,6-trifluoro-5-trifluoromethylbicyclo[2.2.1]hept-2-ene,
5-fluoro-5-pentafluoroethyl-6,6-bis(trifluoromethyl)bicyclo[2.2.1]hept-2-ene,
5,6-difluoro-5-heptafluoro-isopropyl-6-trifluoromethylbicyclo[2.2.1]hept-2-ene,
5-chloro-5,5,6-trifluorobicyclo[2.2.1]hept-2-ene,
5,6-dichloro-5,6-bis(trifluoromethyl)bicyclo[2.2.1]hept-2-ene,
5,5,6-trifluoro-6-trifluoromethoxybicyclo[2.2.1]hept-2-ene,
5,5,6-trifluoro-6-heptafluoropropoxybicyclo[2.2.1]hept-2-ene,
8-fluorotetracyclo[4.4.0.$1^{2,5}$.$1^{7,10}$]-3-dodecene,
8-fluoromethyltetracyclo[4.4.0.$1^{2,5}$.$1^{7,10}$]-3-dodecene,
8-difluoromethyltetracyclo[4.4.0.$1^{2,5}$.$1^{7,10}$]-3-dodecene,
8-trifluoromethyltetracyclo[4.4.0.$1^{2,5}$.$1^{7,10}$]-3-dodecene,
8-pentafluoroethyltetracyclo[4.4.0.$1^{2,5}$.$1^{7,10}$]-3-dodecene,
8,8-difluorotetracyclo[4.4.0.$1^{2,5}$.$1^{7,10}$]-3-dodecene,
8,9-difluorotetracyclo[4.4.0.$1^{2,5}$.$1^{7,10}$]-3-dodecene,
8,8-bis(trifluoromethyl)tetracyclo[4.4.0.$1^{2,5}$.$1^{7,10}$]-3-dodecene,
8,9-bis(trifluoromethyl)tetracyclo[4.4.0.$1^{2,5}$.$1^{7,10}$]-3-dodecene,
8-methyl-8-trifluoromethyltetracyclo[4.4.0.$1^{2,5}$.$1^{7,10}$]-3-dodecene,
8,8,9-trifluorotetracyclo[4.4.0.$1^{2,5}$.$1^{7,10}$]-3-dodecene,
8,8,9-tris(trifluoromethyl)tetracyclo[4.4.0.$1^{2,5}$.$1^{7,10}$]-3-dodecene,
8,8,9,9-tetrafluorotetracyclo[4.4.0.$1^{2,5}$.$1^{7,10}$]-3-dodecene,
8,8,9,9-tetrakis(trifluoromethyl)tetracyclo[4.4.0.$1^{2,5}$.$1^{7,10}$]-3-dodecene,
8,8-difluoro-9,9-bis(trifluoromethyl)tetracyclo[4.4.0.$1^{2,5}$.$1^{7,10}$]-3-dodecene,
8,9-difluoro-8,9-bis(trifluoromethyl)tetracyclo[4.4.0.$1^{2,5}$.$1^{7,10}$]-3-dodecene,
8,8,9-trifluoro-9-trifluoromethyltetracyclo[4.4.0.$1^{2,5}$.$1^{7,10}$]-3-dodecene,
8,8,9-trifluoro-9-trifluoromethoxytetracyclo[4.4.0.$1^{2,5}$.$1^{7,10}$]-3-dodecene,
8,8,9-trifluoro-9-pentafluoropropoxytetracyclo[4.4.0.$1^{2,5}$.$1^{7,10}$]-3-dodecene,
8-fluoro-8-pentafluoroethyl-9,9-bis(trifluoromethyl)tetracyclo[4.4.0.$1^{2,5}$.$1^{7,10}$]-3-dodecene,
8,9-difluoro-8-heptafluoro-isopropyl-9-trifluoromethyltetracyclo[4.4.0.$1^{2,5}$.$1^{7,10}$]-3-dodecene,
8-chloro-8,9,9-trifluorotetracyclo[4.4.0.$1^{2,5}$.$1^{7,10}$]-3-dodecene,
8,9-dichloro-8,9-bis(trifluoromethyl)tetracyclo[4.4.0.$1^{2,5}$.$1^{7,10}$]-3-dodecene,
8-(2,2,2-trifluoroethoxycarbonyl)tetracyclo[4.4.0.$1^{2,5}$.$1^{7,10}$]-3-dodecene, and
8-methyl-8-(2,2,2-trifluoroethoxycarbonyl)tetracyclo[4.4.0.$1^{2,5}$.$1^{7,10}$]-3-dodecene.

The above monomers can be used singly or in combination of two or more kinds.

Of the above polycyclic monomers, preferable are those of the formula (1) wherein $R^1$ and $R^3$ are each a hydrogen atom or a hydrocarbon group of 1 to 10 carbon atoms, more preferably 1 to 4 carbon atoms, particularly preferably 1 to 2 carbon atoms, $R^2$ and $R^4$ are each a hydrogen atom or a monovalent organic group, at least one of $R^2$ and $R^4$ is a hydrogen atom or a polar group other than a hydrocarbon group, m is an integer of 0 to 3, and p is an integer of 0 to 3, more preferably m+p = 0 ~ 4, still more preferably m+p = 0 ~ 2, particularly preferably m=1 and m=0. A polycyclic monomer wherein m=1 and p=0 is preferable because the resulting cycloolefin resin has a high glass transition temperature and shows excellent mechanical strength.

Examples of the polar groups of the polycyclic monomers include carboxyl group, hydroxyl group, alkoxycarbonyl group, allyloxycarbonyl group, amino group, amide group and cyano group. These polar groups may be bonded through a linkage such as methylene group. As the polar group, a hydrocarbon group bonded through a linkage of a divalent organic group having polarity, such as carbonyl group, ether group, silyl ether group, thioether group or imino group, is also available. Of the above groups, preferable is carboxyl group, hydroxyl group, alkoxycarbonyl group or allyloxycarbonyl group, and particularly preferable is alkoxycarbonyl group or allyloxycarbonyl group.

A monomer wherein at least one of $R^2$ and $R^4$ is a polar group represented by the chemical formula - $(CH_2)_nCOOR$ is preferable because the resulting cycloolefin resin has a high glass transition temperature, low hygroscopicity and excellent adhesion to various materials. In the above chemical formula, R is a hydrocarbon group, and the number of carbon atoms of the hydrocarbon group is in the range of preferably 1 to 12, more preferably 1 to 4, particularly preferably

1 to 2. Of such hydrocarbon groups, an alkyl group is preferable. Although n in the above chemical formula is usually in the range of 0 to 5, a smaller value is preferable because the resulting cycloolefin resin has a higher glass transition temperature, and a polycyclic monomer wherein n is 0 is preferable because synthesis thereof is easy.

In the formula (1), $R^1$ or $R^3$ is preferably an alkyl group, more preferably an alkyl group of 1 to 4 carbon atoms, still more preferably an alkyl group of 1 to 2 carbon atoms, particularly preferably a methyl group. It is particularly preferable that this alkyl group is bonded to the same carbon atom as a carbon atom to which the aforesaid polar group represented by the formula - $(CH_2)_nCOOR$ is bonded because hygroscopicity of the resulting cycloolefin resin can be lowered.

Copolymerizable monomer

Examples of the copolymerizable monomers include cycloolefins, such as cyclobutene, cyclopentene, cycloheptene, cyclooctene and dicyclopentadiene. The number of carbon atoms of the cycloolefin is in the range of preferably 4 to 20, more preferably 5 to 12. These monomers can be used singly or in combination of two or more kinds.

The ratio of the polycyclic monomer to the copolymerizable monomer (polycylic monomer/copolymerizable monomer, by weight) is preferably 100/0 to 50/50, more preferably 100/0 to 60/40.

Ring-opening polymerization catalyst

In the present invention, ring-opening polymerization for obtaining (1) the ring-opened polymer of a polycyclic monomer and (2) the ring-opened copolymer of a polycyclic monomer and a copolymerizable monomer is carried out in the presence of a metathesis catalyst.

The metathesis catalyst is a catalyst comprising a combination of:

(a) at least one compound selected from compounds containing W, Mo and Re (referred to as a "compound (a)" hereinafter) and

(b) at least one compound selected from compounds containing IA Group elements of Deming's periodic table (e.g., Li, Na and K), IIA Group elements thereof (e.g., Mg and Ca), IIB Group elements thereof (e.g., Zn, Cd and Hg), IIIA Group elements thereof (e.g., B and Al), IVA Group elements thereof (e.g., Si, Sn and Pb) or IVB Group elements thereof (e.g., Ti and Zr) and having at least one said element-carbon bond or said element-hydrogen bond (referred to as a "compound (b)" hereinafter).

In order to enhance catalytic activity, the metathesis catalyst may contain the later-described additive (c).

Examples of the compounds (a) include compounds described from the 6th line on the lower left-hand section in Page 8 to the 17th line on the upper right-hand section in Page 8 in Japanese Patent Laid-Open Publication No. 132626/1989, such as $WCl_6$, $MoCl_6$ and $ReOCl_3$.

Examples of the compounds (b) include compounds described from the 18th line on the upper right-hand section in Page 8 to the 3rd line on the lower right-hand section in Page 8 in Japanese Patent Laid-Open Publication No. 132626/1989, such as n-$C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane and LiH.

Examples of the additives (c) preferably used include alcohols, aldehydes, ketones and amines. Further, compounds described from the 16th line on the lower right-hand section in Page 8 to the 17th line on the upper left-hand section in Page 9 in Japanese Patent Laid-Open Publication No. 132626/1989 are also employable.

The metathesis catalyst is used in such an amount that the molar ratio between the compound (a) and the polycyclic monomer (compound (a):polycyclic monomer) becomes usually 1:500 to 1:50,000, preferably 1:1,000 to 1: 10,1000.

The ratio between the compound (a) and the compound (b) (compound (a):compound (b)) is in the range of 1: 1 to 1:50, preferably 1:2 to 1:30, as a metal atom ratio.

The ratio between the compound (c) and the compound (a) (compound (c):compound (a)) is in the range of 0.005:1 to 15:1, preferably 0.05:1 to 7:1, as a molar ratio.

Polymerization reaction solvent

Examples of solvents for use in the ring-opening polymerization reaction include alkanes, such as pentane, hexane, heptane, octane, nonane and decane; cycloalkanes, such as cyclohexane, cycloheptane, cyclooctane, decalin and norbornane; aromatic hydrocarbons, such as benzene, toluene, xylene, ethylbenzene and cumene; halogenated alkanes, such as chlorobutane, bromohexane, methylene chloride, dichloroethane, hexamethylene dibromide, chloroform and tetrachloroethylene; halogenated aryl compounds, such as chlorobenzene; saturated carboxylic acid esters, such as ethyl acetate, n-butyl acetate, isobutyl acetate, methyl propionate and dimethoxyethane; and ethers, such as

dibutyl ether, tetrahydrofuran and dimethoxyethane. These solvents can be used singly or as a mixture of two or more kinds. Of these, aromatic hydrocarbons are preferable. The solvent is used as a solvent for constituting a molecular weight modifier solution or as a solvent for dissolving the polycyclic monomer and/or the metathesis catalyst.

The solvent is used in such an amount that the ratio between the solvent and the polycyclic monomer (solvent: polycyclic monomer, by weight) becomes usually 1:1 to 10:1, preferably 1:1 to 5:1.

Molecular weight modifier

Although the molecular weight of the resulting ring-opened (co)polymer can be controlled by polymerization temperature, type of the catalyst and type of the solvent, it can be controlled also by allowing a molecular weight modifier to be present in the reaction system.

Preferred examples of the molecular weight modifiers include α-olefins, such as ethylene, propene, 1-butene, 1-pentene, 1-hexene, 1-heptene, 1-octene, 1-nonene and 1-decene, and styrene. Of these, 1-butene and 1-hexene are particularly preferable. These molecular weight modifiers can be used singly or as a mixture of two or more kinds.

The molecular weight modifier is used in an amount of usually 0.005 to 0.6 mol, preferably 0.02 to 0.5 mol, based on 1 mol of the polycyclic monomer used in the ring-opening polymerization reaction.

Unsaturated hydrocarbon polymer

Although the ring-opened copolymer can be obtained by ring-opening polymerizing the polycyclic monomer and the copolymerizable monomer through the below-described ring-opening copolymerization reaction, the polycyclic monomer may be ring-opening polymerized in the presence of an unsaturated hydrocarbon polymer containing two or more carbon-carbon double bonds in the main chain, such as a conjugated diene compound (e.g., polybutadiene or polyisoprene), a styrene/butadiene copolymer, an ethylene/non-conjugated diene copolymer or polynorbornene.

Ring-opening (co)polymerization reaction

For preparing the ring-opened copolymer, publicly known ring-opening polymerization reaction for cycloolefin is employable, and the ring-opened copolymer can be prepared by ring-opening polymerizing the polycyclic monomer and the copolymerizable monomer in the presence of the ring-opening polymerization catalyst, the polymerization reaction solvent, and if necessary, the molecular weight modifier.

Hydrogenated (co)polymer

The ring-opened (co)polymer obtained by the above process can be used as it is, but a hydrogenated (co) polymer obtained by hydrogenating the ring-opened (co)polymer may be used. This hydrogenated (co)polymer is useful as a material of a resin having high impact resistance.

The hydrogenation reaction can be carried out by a usual method. That is to say, a hydrogenation catalyst is added to a solution of the ring-opened (co)polymer, and a hydrogen gas of atmospheric pressure to 300 atm, preferably 3 to 200 atm, is allowed to act on the solution at a temperature of 0 to 200°C, preferably 20 to 180°C.

By virtue of the hydrogenation, the resulting hydrogenated (co)polymer exhibits excellent heat stability, and this excellent property is not lowered even by heat that is applied when the (co)polymer is molded or a manufactured article of the (co)polymer is used.

The degree of hydrogenation of the hydrogenated (co)polymer, as measured by $^1$H-NMR at 500 MHz, of usually not less than 50%, preferably not less than 70%, more preferably not less than 90%, particularly preferably not less than 98%, most preferably not less than 99%. As the degree of hydrogenation is increased, stability to heat or light becomes more excellent, and when the (co)polymer is used as a base of a retardation device, stable properties can be obtained over a long period of time.

The gel content in the hydrogenated (co)polymer used as the cycloolefin resin is preferably not more than 5% by weight, particularly preferably not more than 1% by weight.

Hydrogenation catalyst

As the hydrogenation catalyst, a catalyst used for usual hydrogenation reaction of an olefin compound is employable. The hydrogenation catalyst may be a heterogeneous catalyst or a homogeneous catalyst.

Examples of the heterogeneous catalysts include solid catalysts wherein noble metal catalytic substances, such as palladium, platinum, nickel, rhodium and ruthenium, are supported on carriers, such as carbon, silica, alumina and titania. Examples of the homogeneous catalysts include nickel naphthenate/triethylaluminum, nickel acetylacetonate/ triethylaluminum, cobalt octenate/n-butyllithium, titanocene dichloride/diethylaluminum monochloride, rhodium acetate, chlorotris(triphenylphosphine)rhodium, dichlorotris(triphenylphosphine)ruthenium, chlorohydrocarbonyltris(triphenylphosphine)ruthenium and dichlorocarbonyltris(triphenylphosphine)ruthenium. The catalyst may be in the form of a powder or granules.

The hydrogenation catalyst is used in such an amount that the ratio between the ring-opened (co)polymer and the hydrogenation catalyst (ring-opened (co)polymer:hydrogenation catalyst, by weight) becomes $1:1\times10^{-6}$ to 1:2.

Cyclization by Friedel-Crafts reaction

As the hydrogenated (co)polymer, a (co)polymer obtained by hydrogenating the ring-opened (co)polymer as above may be used, but a (co)polymer obtained by cyclizing the ring-opened (co)polymer by Friedel-Crafts reaction and then hydrogenating the reaction product is also employable.

Although the method to cyclize the ring-opened (co)polymer by Friedel-Crafts reaction is not specifically restricted, a publicly known method using an acid compound described in Japanese Patent Laid-Open Publication No. 154339/1975 is adoptable. As the acid compound, Lewis acid, such as $AlCl_3$, $BF_3$, $FeCl_3$, $Al_2O_3$, HCl, $CH_3ClCOOH$, zeolite or activated clay, or Brϕnsted acid is employable. The cyclized ring-opened (co)polymer can be hydrogenated in the same manner as in the hydrogenation reaction of the ring-opened (co)polymer.

Saturated copolymer

As the cycloolefin resin, a saturated copolymer of the polycyclic monomer and an unsaturated double bond-containing compound is also employable. The saturated copolymer can be obtained by usual addition polymerization reaction using a catalyst.

Unsaturated double bond-containing compound

The unsaturated double bond-containing compound is preferably a compound of 2 to 12 carbon atoms, more preferably a compound of 2 to 8 carbon atoms. Examples of the unsaturated double bond-containing compounds include olefin compounds, such as ethylene, propylene and butene.

The weight ratio of the polycyclic monomer to the unsaturated double bond-containing compound (polycyclic monomer/unsaturated double bond-containing compound) is in the range of preferably 90/10 to 40/60, more preferably 85/15 to 50/50.

Addition polymerization catalyst

As the addition polymerization catalyst, at least one compound selected from a titanium compound, a zirconium compound and a vanadium compound, and an organoaluminum compound as a co-catalyst are used.

Examples of the titanium compounds include titanium tetrachloride and titanium trichloride, and examples of the zirconium compounds include bis(cyclopentadienyl)zirconium chloride and bis(cyclopentadienyl)zirconium dichloride.

As the vanadium compound, a vanadium compound represented by the formula $VO(OR)_aX_b$ or $V(OR)_cX_d$ (wherein R is a hydrocarbon group, X is a halogen atom, $0\leq a\leq 3$, $0\leq b\leq 3$, $2\leq(a+b)\leq 3$, $0\leq c\leq 4$, $0\leq d\leq 4$ and $3\leq(c+d)\leq 4$), or an electron donor adduct of such a vanadium compound is used.

Examples of the electron donors include oxygen-containing electron donors, such as alcohol, phenols, ketone, aldehyde, carboxylic acid, ester of organic acid or inorganic acid, ether, acid amide, acid anhydride and alkoxysilane; and nitrogen-containing electron donors, such as ammonia, amine, nitrile and isocyanate.

As a co-catalyst, at least one organoaluminum compound selected from compounds having at least one aluminum-carbon bond or aluminum-hydrogen bond is used.

In the case where a vanadium compound is used as the catalyst in the addition polymerization reaction, it is desirable that the ratio of an aluminum atom of the organoaluminum compound to a vanadium atom of the vanadium compound (Al/V) is not less than 2, preferably 2 to 50, particularly preferably 3 to 20.

Polymerization reaction solvent and molecular weight modifying method

As a polymerization reaction solvent for the addition polymerization reaction, the same solvent as used in the ring-opening polymerization reaction is employable. Control of the molecular weight of the resulting saturated copolymer is usually carried out by the use of hydrogen.

Addition (co)polymer or its hydrogenated (co)polymer

As the cycloolefin resin, an addition (co)polymer of one or more monomers selected from the polycylic monomer, a vinyl cyclic hydrocarbon monomer and a cyclopentadiene monomer, or its hydrogenated (co)polymer is also employable.

Vinyl cyclic hydrocarbon monomer

Examples of the vinyl cyclic hydrocarbon monomers include vinylcyclopentene monomers, such as 4-vinylcyclopentene and 2-methyl-4-isopropenylcyclopentene; vinylated 5-member ring hydrocarbon monomers, such as vinylcyclopentane monomers, specifically 4-vinylcyclopentane and 4-isopropenylcyclopentane; vinylcyclohexene monomers, such as 4-vinylcyclohexene, 4-isopropenylcyclohexene, 1-methyl-4-isopropenylcyclohexene, 2-methyl-4-vinylcyclohexene and 2-methyl-4-isopropenylcyclohexene; vinylcyclohexane monomers, such as 4-vinylcyclohexane and 2-methyl-4-isopropenylcyclohexane; styrene monomers, such as styrene, α-methylstyrene, 2-methylstyrene, 3-methylstyrene, 4-methylstyrene, 1-vinylnaphthalene, 2-vinylnaphthalene, 4-phenylstyrene and p-methoxystyrene; terpene monomers, such as d-terpene, 1-terpene, diterpene, d-limonene, 1-limonene and dipentene; vinylcycloheptene monomers, such as 4-vinylcycloheptene and 4-isopropenylcycloheptene; and vinylcycloheptane monomers, such as 4-vinylcycloheptane and 4-isopropenylcycloheptane. Of these, styrene and α-methylstyrene are preferable. These monomers are used singly or in combination of two or more kinds.

Cyclopentadiene monomer

Examples of the cyclopentadiene monomers include cyclopentadiene, 1-methylcyclopentadiene, 2-methylcyclopentadiene, 2-ethylcyclopentadiene, 5-methylcyclopentadiene and 5,5-methylcyclopentadiene. Of these, cyclopentadiene is preferable. These monomers are used singly or in combination of two or more kinds.

Addition polymerization reaction and hydrogenation reaction

Addition polymerization reaction of one or more monomers selected from the polycyclic monomer, the vinyl cyclic hydrocarbon monomer and the cyclopentadiene monomer can be carried out in the same manner as in the addition polymerization reaction for obtaining the aforesaid saturated copolymer. The hydrogenated (co)polymer of the addition (co)polymer can be obtained by the same hydrogenation as used for preparing the hydrogenated (co)polymer of the ring-opened copolymer.

Alternating copolymer

As the cycloolefin resin, an alternating copolymer of the polycyclic monomer and an acrylate is also employable. The "alternating copolymer" referred to herein means a copolymer having a structure wherein a structural unit derived from the polycyclic monomer is always adjacent to a structural unit derived from the acrylate. However, a structure wherein structural units derived from the acrylates are adjacent to each other is not denied. That is to say, it means a copolymer having a structure wherein structural units derived from the acrylates may be adjacent to each other but structural units derived from the polycylic monomer are not adjacent to each other.

Acrylate

Examples of the acrylates include linear, branched or cyclic alkyl acrylates of 1 to 20 carbon atoms, such as methyl acrylate, 2-ethylhexyl acrylate and cyclohexyl acrylate; heterocyclic group-containing acrylates of 2 to 20 carbon atoms, such as glycidyl acrylate and 2-tetrahydrofurfuryl acrylate; aromatic ring group-containing acrylates of 6 to 20 carbon atoms, such as benzyl acrylate; and acrylates having polycyclic structure of 7 to 30 carbon atoms, such as isobornyl acrylate and dicyclopentanyl acrylate.

Polymerization for preparing alternating copolymer

The alternating copolymer of the polycyclic monomer and the acrylate can be obtained by subjecting usually 30 to 70 mol of the polycyclic monomer and 70 to 30 mol of the acrylate, preferably 40 to 60 mol of the polycyclic monomer and 60 to 40 mol of the acrylate, particularly preferably 45 to 55 mol of the polycyclic monomer and 55 to 45 mol of the acrylate based on 100 mol of the total amount of the polycyclic monomer and the acrylate, to radical polymerization in the presence of Lewis acid.

The amount of the Lewis acid is in the range of 0.001 to 1 mol based on 100 mol of the acrylate. A publicly known organic peroxide that generates free radical or a publicly known radical polymerization initiator of azobis type is employable. The polymerization reaction temperature is in the range of usually -20 to 80°C, preferably 5 to 60°C. As the polymerization reaction solvent, the same solvent as used in the ring-opening polymerization reaction is employable.

The cycloolefin resin for use in the invention has an intrinsic viscosity $[\eta]_{inh}$ of 0.2 to 5 dl/g, more preferably 0.3 to 3 dl/g, particularly preferably 0.4 to 1.5 dl/g, a number-average molecular weight (Mn) in terms of polystyrene, as measured by gel permeation chromatography (GPC), of preferably 8,000 to 100,000, more preferably 10,000 to 80,000, particularly preferably 12,000 to 50,000, and a weight-average molecular weight (Mw) in terms of polystyrene, as measured by gel permeation chromatography (GPC), of preferably 20,000 to 300,000, more preferably 30,000 to 250,000, particularly preferably 40,000 to 200,000. When the intrinsic viscosity $[\eta]_{inh}$, the number-average molecular weight and the weight-average molecular weight are in the above ranges, a balance between properties of the cycloolefin resin, such as heat resistance, water resistance, chemical resistance and mechanical property, and stability of phase difference of transmitted light in the use of a film of the cycloolefin resin as a base of a retardation device becomes excellent.

The cycloolefin resin has a glass transition temperature (Tg) of usually not lower than 100°C, preferably 120 to 350°C, more preferably 130 to 250°C, particularly preferably 140 to 200°C. If Tg is less than the lower limit of the above range, change of optical properties of the resulting retardation device is sometimes increased by heat from a light source or other neighboring parts. If Tg exceeds the upper limit of the above range, there is a high possibility of heat deterioration of the cycloolefin resin when a base composed of the cycloolefin resin is heated up to a temperature in the vicinity of Tg in the stretching operation or the like.

The water saturation-absorption of the cycloolefin resin at 23°C is in the range of preferably 0.05 to 2% by weight, more preferably 0.1 to 1% by weight. When the water saturation-absorption is in this range, uniform optical properties can be imparted to a film of the cycloolefin resin. Further, the cycloolefin resin film exhibits excellent adhesion to a retardation film and does not suffer occurrence of peeling or the like during the use. Furthermore, the cycloolefin resin has excellent compatibility with an antioxidant or the like, and therefore, addition of the antioxidant in a large amount becomes possible. If the water saturation-absorption is less than the lower limit of the above range, the cycloolefin resin film has poor adhesion to a retardation film or another transparent substrate and is liable to suffer peeling. If the water saturation-absorption exceeds the upper limit of the above range, the cycloolefin resin film absorbs water and is liable to suffer dimensional change. The water saturation-absorption is a value obtained by measuring an increase in weight after the resin is immersed in water at 23°C for 1 week in accordance with ASTM D570.

As the cycloolefin resin, a resin satisfying requirements of a photoelasticity constant ($C_P$) of 0 to 100 ($\times 10^{-12}$ $Pa^{-1}$) and a stress optical coefficient ($C_R$) of 1,500 to 4,000 ($\times 10^{-12}$ $Pa^{-1}$) can be preferably used. The "photoelasticity constant ($C_P$)" and the "stress optical coefficient ($C_R$)" are described in various literatures (e.g., Polymer Journal, Vol. 27, No. 9, pp. 943-950 (1995), Journal of Japan Rheological Society, Vol. 19, No. 2, pp. 93-97 (1991), *Photoelasticity Experimental Method,* The Nikkan Kogyo Shinbun Ltd., the 7th edition, 1975) and are publicly known, and the former indicates degree of occurrence of phase difference due to a stress of a polymer in a glass state, while the latter indicates degree of occurrence of phase difference due to a stress of a polymer in a fluid state.

A large photoelasticity constant ($C_P$) means that in the case where a polymer is used in a glass state, because of a stress produced by an external factor or a strain of the frozen polymer itself, phase difference is liable to occur sensitively, and for example, it means that unnecessary phase difference is easily produced by a slight stress that is brought about by shrinkage of a material accompanying change of temperature or change of humidity. For this reason, the photoelasticity constant ($C_P$) is desirably as small as possible.

On the other hand, a large stress optical coefficient ($C_R$) means that when the cycloolefin resin film is imparted with ability of exhibiting phase difference, desired phase difference can be obtained with a low stretch ratio, or a film capable of giving a large phase difference is easily obtained. In case of a large stress optical coefficient ($C_R$), further, there is a great merit that when the same phase difference is desired, a film thickness can be made smaller, as compared with a resin having a small stress optical coefficient ($C_R$).

From the above viewpoints, the photoelasticity constant ($C_P$) is in the range of preferably 0 to 100 ($\times 10^{-12}$ $Pa^{-1}$), more preferably 0 to 80 ($\times 10^{-12}$ $Pa^{-1}$), still more preferably 0 to 50 ($\times 10^{-12}$ $Pa^{-1}$), particularly preferably 0 to 30 ($\times 10^{-12}$ $Pa^{-1}$), most preferably 0 to 20 ($\times 10^{-12}$ $Pa^{-1}$). If the photoelasticity constant ($C_P$) exceeds the upper limit of the above range, a transmitted light quantity is sometimes decreased when a retardation device using the resin as a base is used, because of a stress occurring in the formation of a retardation film or change of birefringence of the cycloolefin resin film brought about by the environmental change in the use of a retardation device.

The water vapor permeability of the cycloolefin resin, as measured regarding a film of 25 μm thickness formed from the resin under the conditions of 40°C and 90%RH, is in the range of usually 1 to 400 $g/m^2 \cdot 24hr$, preferably 5 to 350 $g/m^2 \cdot 24hr$, more preferably 10 to 300 $g/m^2 \cdot 24hr$. When the water vapor permeability is in this range, change of properties due to water content in an adhesive or a bonding agent or change of properties due to humidity of the environment where a retardation device is used can be reduced or avoided.

The cycloolefin resin for use in the invention comprises at least one (co)polymer of the aforesaid (co)polymers (1) to (7), and to the cycloolefin resin, an antioxidant, an ultraviolet light absorber, etc. publicly known can be added to further stabilize the resin. In order to improve processability, additives used for conventional resin processing, such as lubricant, may be added.

Examples of the antioxidants include 2,6-di-t-butyl-4-methylphenol, 2,2'-dioxy-3,3'-di-t-butyl-5,5'-dimethyldiphenylmethane and tetrakis[methylene-3-(3,5-dit-butyl-4-hydroxyphenyl)propionato]methane. Examples of the ultraviolet light absorbers include 2,4-dihyroxybenzophenone and 2-hydroxy-4-methoxybenzophenone.

As the cycloolefin resin for use in the invention, any of the aforesaid (co)polymers (1) to (7) may be used singly, but a blend of two or more (co)polymers selected from the (co)polymers (1) to (7) may be used. Blending of the (co) polymers can be carried out in a state of pellets using an extruder or the like, or can be carried out in a state of a solution.

(B) Inorganic particles

The inorganic particles for use in the invention are inorganic particles (referred to as "inorganic particles (B)" hereinafter) which have a longer diameter and a shorter diameter and exhibit shape anisotropy, a refractive index of which in the longer diameter direction is larger than an average refractive index of which in the direction crossing the longer diameter direction at right angles and which exhibit birefringence. The "longer diameter" means a maximum diameter (also referred to as an "a axis" hereinafter) of the inorganic particle (B), and the "shorter diameter" means a minimum diameter (referred to as a "b axis" hereinafter) of axes perpendicular to the a axis. In this specification, an axis perpendicular to both of the a axis and the b axis is defined as a "c axis".

In the inorganic particles (B), the ratio of a length (longer diameter: $L_a$) of the a axis to a length (shorter diameter: $D_b$) of the b axis (said ratio being referred to as an "aspect ratio", $L_a/D_b$) is usually not less than 2.0, preferably 5.0 to 10000, particularly preferably 10.0 to 1000. The ratio ($D_c/D_b$) of a length ($D_c$) of the c axis to a length ($D_b$) of the b axis is in the range of usually 1.0 to 1.5, preferably 1.0 to 1.3. When the aspect ratio ($L_a/D_b$) is in the above range, the inorganic particles (B) can be easily arranged so that the longer diameter of the inorganic particles (B) should be parallel to the film plane when a retardation film is formed by stretching, and birefringence of the retardation film can be easily controlled. If the aspect ratio ($L_a/D_b$) is less than 2.0, the inorganic particles (B) are sometimes arranged in random directions in the film, and as a result, the resulting film exhibits no birefringence (phase difference), or if it exhibits birefringence, its value is sometimes small. On this account, needle-like inorganic particles are particularly preferably employed.

Although the average longer diameter of the inorganic particles (B) is not specifically restricted provided that a retardation film having transparency can be formed, it is usually not more than 2 $\mu$m, preferably not more than 1 $\mu$m, more preferably not more than 0.5 $\mu$m, particularly preferably not more than 0.1 $\mu$m. The average longer diameter is a number-average value (n=100) of longer diameters of the particles measured by observation under a transmission electron microscope. If the average longer diameter exceeds the upper limit of the above range, transparency of the retardation film becomes poor, or in the orientation process by stretching, the inorganic particles are not well orientated and phase difference hardly occurs.

In the inorganic particles (B), particles having a longer diameter of not less than 10 $\mu$m may be contained provided that the average longer diameter is in the above range, but the content of the particles having a longer diameter of not less than 10 $\mu$m is preferably less than 10% by weight, more preferably less than 5% by weight, particularly preferably less than 1% by weight, most preferably less than 0.1% by weight. When the content of the particles having a longer diameter of not less than 10 $\mu$m is in the above range, light transmittance can be increased, and a difference in refractive index of the retardation film between the direction parallel to the film plane and the film thickness direction is easily controlled.

The inorganic particles (B) are particles having properties that the refractive index in the a axis direction (longer diameter direction) is larger than the average refractive index in the direction crossing the longer diameter direction at right angles. A difference ($\Delta n_p=n_a-n_r$) between the refractive index ($n_a$) in the a axis direction (longer diameter direction) and the average refractive index ($n_r$) in the direction crossing the a axis at right angles is not specifically restricted provided that the phase difference of the resulting retardation film is in the later-described range, but it is usually not less than 0.010, preferably not less than 0.050, more preferably not less than 0.100, particularly preferably not less than 0.200. When this $\Delta n_p$ is in the above range, phase difference of the retardation film in the film in-plane direction and phase difference of the retardation film in the film thickness direction can be easily controlled.

An average value of the refractive index of the inorganic particles (B) in the a axis direction (longer diameter direction) and the refractive index thereof in the direction crossing the a axis at right angles, that is, an average refractive index of the whole particles is usually less than 3, preferably not more than 2.5, more preferably not more than 2.0. When the average refractive index of the whole particles is in the above range, scattering of light in the resulting retardation film can be inhibited.

The inorganic particles (B) having both of such shape anisotropy and birefringence have only to be particles containing, as a main component, an inorganic compound having properties that when particles are formed from the compound, the refractive index of the particles in the longer diameter direction is larger than the refractive index thereof in the direction crossing the longer diameter direction at right angles.

Examples of such components include:

$Ag_2S$, $Ca_2(Mg, Fe)_5Si_8O_{22}(OH)_2$, $KAlSi_3O_8$, $NaFe^{3+}Si_2O_6$, (Na, Ca) ($Fe^{3+}$, $Fe^{2+}$, Mg, Al) $Si_2O_6$, $Na_2Fe^{2+}{}_5TiO_2$

$(Si_2O_6)_3$, MnS, $NaAlSi_3O_8$(An0-An10), $(Ca, Ce)_3(Fe^{2+},Fe^{3+})Al_2O(SiO_4)$ $(Si_2O_7)$ (OH), $Fe_3Al_2Si_3O_{12}$, PhTe, $KAl_3(SO_4)_2(OH)_6$, Ag-Hg, $LiAlFPO_4$, $SiO_2$, $NaAlSi_2O_6{\cdot}H_2O$, $TiO_2$, $Al_2SiO_5$, Ab70An30-Ab50An50, $Ca_3Fe_2Si_3O_{12}$, $PbSO_4$, $CaSO_4$, $CaFe(CO_3)_2$, $Ni(AsO_4)_2{\cdot}8H_2O$, $CaAl_2Si_2O_8$(An90-An100), $(K,Na)AlSi_3O_8$, $(Mg, Fe)_7Si_8O_{22}(OH)_2$, $Mg_3Si_2O_5(OH)_4$, Sb, $Cu_3SO_4(OH)_4$, $Ca_5(PO_4)_3(F,Cl,OH)$, $KCa_4(Si_4O_{19})_2F{\cdot}8H_2O$, $CaCo_3$, $Na_3Fe^{2+}{}_4Fe^{3+}Si_8O_{22}(OH)_2$, $Ag_2S$, FeAsS, $(K,Na)_3(Fe,Mn)_7(TiZr)_2Si_8(O,OH)_{31}$, $Cu_2Cl(OH)_3$, (Ca, Na) (Mg, Fe,Al) $(Si,Al)_2O_6$, $(Zn,Cu)_5(Co_3)_2(OH)_3$, $Ca(UO_2)_2(PO_4)_2{\cdot}$10-12$H_2O$, $(Ca,Fe,Mn)_3Al_2BSi_4O_{15}(OH)$, $CU_3(CO_3)_2(OH)_2$,

$BaSO_4$, $(Ca,Na)_{0.3}Al_2(OH)_2(Al,Si)_4O_{10}{\cdot}4H_2O$, $BaTiSi_3O_9$, $Be_3Al_2(Si_6O_{18})$, $NaBePO_4$, $K(Mg,Fe)_3(AlSi_3O_{10})(OH)_2$, $Bi_2S_3$, $\gamma AlO(OH)$, $Mg_3ClB_7O_{13}$, $Na_2B_4O_5(OH)_4{\cdot}8H_2O$, $Cu_5FeS_4$, $(Ni,Fe)S_2$, $NaAl_3(PO_4)_2(OH)_4$, NiSb, $Cu_4So_4(OH)_6$, AgBr, $(Mg,Fe)SiO_3$, $Mg(OH)_2$,
$(Mn,Ca,Fe)SiO_3$, Ab30An70-Ab10An90, $AuTe_2$, $Na_6Ca(CO_3)(AlSiO_4)_6{\cdot}2H_2O$, $Ca_5F(PO_4,CO_3,OH)_3$, $KMgCl_3{\cdot}6H_2O$, $K_2(UO_2)_2(VO_4)_2{\cdot}3H_2O$, $SnO_2$, $SrSO_4$, $BaAl_2Si_2O_8$, $(Ce,Th)O_2$, $PbCO_3$, $Ca_2Al_2Si_4{\cdot}6H_2O$, $CuSO_4{\cdot}5H_2O$, $Cu_2S$, $CuFeS_2$, $CuFe_6(PO_4)_4(OH)_8{\cdot}4H_2O$, $(Fe^{2+},Mg,Fe^{3+})_5Al(Si_3Al)_4O_{10}(OH,O)_8$, $(Mg,Fe)_{17}Si_{20}O_{54}(OH)_6$, $(Ni,Co)As_{3-x}$, $Ca_5(PO_4)_3Cl$, AgCl, $(Mg, Fe)_3(Si,Al_4)O_{10}(OH)_2{\cdot}(Mg, Fe)_3(OH)_6$, $(Fe,Mg)_2Al_4O_2(SiO_4)_2(OH)_4$, $Mg_5(SiO_4)_2(F,OH)_2$, $FeCr_2O_4$, $BeAl_2O_4$, $Mg_3Si_2O_5(OH)_4$, HgS, $MgSiO_3$, $FeSiO_3$, $Mg_9(SiO_4)_2(F,OH)_2$, $(Mg,Fe)SiO_3$, $Ca_2Al_3O(SiO_4)(Si_2O_7)(OH)$, $Ca(Mg, Al)_{3-2}Al_2Si_2O_{10}(OH)_2$, $Co_3(AsO_4)_2{\cdot}8H_2O$, (CO,Fe)AsS, $CaB_3O4(OH)_3{\cdot}H_2O$, $(Fe,Mn)Nb_2O_6$, Cu, $(Mg, Fe)_2Al_4Si_5O_{18}{\cdot}nH_2O$, $Al_2O_3$, CuS, $NaFe^{2+}{}_3Fe^{3+}{}_2Si_8O_{22}(OH)_2$, $PbCrO_4$, $Na_3AlF_6$, $KMn_8O_{16}$, $(Mg, Fe)_7Si_8O_{22}(OH)_2$, $Cu_2O$,

$Ca(B_2Si_2O_8)$, $CaB(SiO)_4(OH)$, $\alpha AlO(OH)$, $Al_2Si_2O_5(OH)_4$, $Cu_9S_5$, $CaMgSi_2O_6$, $Cu_6(Si_6O_{18}){\cdot}6H_2O$, $Cu_{31}S_6$, $CaMg(CO_3)_2$, $Al_7O_3(BO_3)(SiO_4)_3$, $NaCaMg_5AlSi_7O_{22}(OH)_2$, $Cu_3AsS_4$,
$MgSiO_3$, $Ca_2(Al, Fe)Al_2O(SiO_4)(Si_2O_7)(OH)$, $MgSO_4{\cdot}7H_2O$, $Co_3(AsO_4)_2{\cdot}8H_2O$, BeAl $(SiO_4)(OH)$, $LiAlSiO_4$, $Cu_3SbS_4$, $Fe_2SiO_4$, $FeWO_4$, $(Y,Er,Ce,Fe)NbO_4$, $Fe_2(MoO_4)_3{\cdot}8H_2O$,
$Ca_2Fe_5Si_8O_{22}(OH)_2$, $FeTi_2O_5$, $FeSiO_3$, $Na_4Ca_4Ti_4(SiO_4)_3(O,OH,F)_3$, $Ag_3AuSe_2$, $Ca_5(PO_4)_3F$, $CaF_2$, $Mg_2SiO_4$, $(Zn, Fe, Mn)(Fe,Mn)_2O_4$, $YFeBe_2(SiO_4)_2O_2$, $ZnAl_2O_4$, $MnAl_2O_4$, PbS, $(Ni,Mg)_3Si_2O_5(OH)_4$, $Na_2Ca(CO_3)_2{\cdot}5H_2O$, $MgTiO_3$, NiAsS, $Al(OH)_3$, (Co,Fe)AsS, $Na_2Mg_3Al_2Si_8O_{22}(OH)_2$, $(Na_2,Ca)(Al_2Si_4O_{12}){\cdot}6H_2O$, $\alpha FeO(OH)$, Au, $(Fe,Mg)_3Si_2O_5(OH)_4$, CdS, $Ca_3Al_2Si_3O_{12}$, $Fe_7Si_8O_{22}(OH)_2$, $CaSO_4{\cdot}2H_2O$,

NaCl, $Al_2Si_2O_5(OH)_4$, $Al_2Si_2O_5(OH)_4{\cdot}2H_2O$, $Ba(Al_2Si_6O_{16}){\cdot}6H_2O$, $NaCa_2Fe_4(Al,Fe)Al_2Si_6O_{22}(OH)_2$, $(Na, Ca)_{4-8}(AlSiO_4)_6(SO_4)_{1-2}$, $(Mg,Li)_3Si_4O_{10}(OH)_2Na_{0.3}{\cdot}4H_2O$, $CaFeSi_2O_6$, $Fe_2O_6$, $Zn_4(Si_2O_7)(OH)_2{\cdot}H_2O$, $FeAl_2O_4$, $CaAl_2Si_7O_{18}{\cdot}6H_2O$, $Ba_2Mn_8O_{16}$, $Li_2(Mg, Fe)_3(Al, Fe^{3+})_2Si_8O_{22}(OH)_2$, $(Ca,Na)_{2-3}(Mg,Fe,Al)_5Si_6(Si,Al)_2O_{22}(OH)_2$, $MnWO_4$, $Mg_7(SiO_4)_3(F,OH)_2$, $(K,Ba)(Al,Si)_2Si_2O_8$, $CaMgB_6O_8(OH)_6{\cdot}3H_2O$, $Ca_3Al_2(Si_2O_8)(SiO_4)_{1-m}(OH)_{4m}$, $Ca_5(PO_4)_3(OH)$, $Zn_5(CO_3)_2(OH)_6$, $(Mg,Fe)SiO_3$, $FeTiO_3$, $CaFe^{2+}{}_3Fe^{3+}O(Si_2O_7)$ (OH), $(Mg,Fe)_2Al_4Si_5O_{18}{\cdot}nH_2O$, $CaB_3O_3(OH)_5{\cdot}4H_2O$, AgI, Ag(Cl,Br,I), $MnFe_2O_4$, $NaAlSi_2O_6$, $KFe_3(SO_4)_2(OH)_6$, $(Mg, Fe)_{10}Si_{12}O_{32}(OH)_4$, $CaMnSi_2O_6$, $KMg(Cl, SO_4){\cdot}2.75H_2O$, $KAlSiO_4$, $Al_2Si_2O_5(OH)_4$, $Na_2B_4O_6(OH)_2{\cdot}3H_2O$, $MgSO_4{\cdot}H_2O$, $CaFeSiO_4$, $CuAuTe_4$, $AuTe_2$, $CaMn(CO_3)_2$, $Al_2SiO_5$,

$Na_3Sr_2Ti_3(Si_2O_7)_2(O,OH,F)_2$, $K_2Mg_2(SO_4)_3$, $Ca(Al_2Si_4O_{12}){\cdot}4H_2O$, $CaAl_2(Si_2O_7)(OH)_2{\cdot}H_2O$, $(Mg,Fe)Al_2(PO_4)_2(OH)_2$, $(Na,Ca)_8(AlSiO_4)_6(SO_4,S,Cl)_2$, $\gamma FeO(OH)$, $K(Li,Al)_{2-3}(AlSi_3O_{10})$ $(O,OH,F)_2$, $KAlSi_2O_6$, $FeO{\cdot}OH{\cdot}nH_2O$, $Co_3S_4$, PbO, $Li(Mn,Fe)PO_4$, $Cu_3AsS_4$, $\gamma Fe_2O_3$, $MgCr_2O_4$, $MgFe_2O_4$, $MgCO_3$, $Fe_3O_4$, $Cu_2(CO_3)(OH)_2$, MnO(OH), $(Mn,Fe)Ta_2O_6$, $(Na,K)Mn_8O_{16}{\cdot}nH_2O$, $FeS_2$, $CaAl_2(Al_2Si_2)_{10}(OH)_2$, $Na_4(AlSi_3O_8)_3(Cl_2,CO_3,SO_4)$, $Ca_4(Al_2Si_2O_8)_3(Cl_2,CO_3,SO_3)$, $Ca_3Fe_2(SiO_4)_3$, $FeSO_4{\cdot}7H_2O$, $KAlSi_3O_8$, $Ca_2Ta_2O_6(O,OH,F)$, NiS, $Pb_5(AsO_4)_3Cl$, $Pb_3O_4$, $Fe_3Si_4O_{10}(OH)_2$, $MoS_2$, $(Ce,La,Y,Th)PO_4$, $(Li,Na)Al(PO_4)$ (OH, F), $CaMgSiO_4$, $(Al,Mg)_8(Si_4O_{10})_4(OH)_8{\cdot}12H_2O$, $KAl_2(AlSi_3O_{10})(OH)_2$, $Al_2Si_2O_5(OH)_4$, $Pb_5Au(Te,Sb)_4S_{5-8}$, $(Na,K)Al_3(SO_4)_2(OH)_6$, $Na_2Al_2Si_3O_{10}{\cdot}2H_2O$, $(Na,K)AlSiO_4$, $KNa_2Li(Fe,Mn)_2TiO_2(Si_4O_{11})_2$, NiAs, $KNo_3$, $NaNO_3$, $Fe_2(Al,Si)_4O_{10}(OH)_2Na_{0.3}{\cdot}nH_2O$, $Mg_3(SiO_4)$ $(F,OH)_2$, $Na_8(AlSiO_4)_6SO_4$,

$(Mg, Fe)_2SiO_4$, (Ca,Na) $(Mg,Fe,Al)Si_2O_6$, $As_2S_3$, $KAlSi_3O_8$, $FeSiO_3$, $NaAl_2(AlSi_3O_{10})(OH)_2$, $NaCa_2Fe_4(Al, Fe)Al_2Si_6O_{22}(OH)_2$, $VS_4$, $Ca_2NaH(SiO_3)_3$, $CaTiO_3$, $Li(AlSi_4O_{10})$, $Be_2SiO_4$, $KCa(Al_3Si_5O_{16}){\cdot}6H_2O$, $KMg_3(AlSi_3O_{10})(OH)_2$, $Pb_2CO_3Cl_2$, $Ca_2MnAl_2O(SiO_4)(Si_2O_7)(OH)$ , $Cu_8(Si_4O_{11})_2(OH)_2{\cdot}H_2O$, $K_2Ca_2Mg(SO_4)_2{\cdot}2H_2O$, $KAlSi_3O_8$, $CaMoO_4$, $Ca_2Al(AlSi_3O_{10})(OH)_2$, $Ag_3AsS_3$, $CaSiO_3$, $Ag_3SbS_3$, $MnO_2$, $Pb_5(PO_4)_3Cl$, $MnTiO_3$, $Al_2Si_4O_{10}(OH)_2$, $Na_2Ti_2Si_2O_9$, AsS, $MnCO_3$, $MnSiO_3$, $Na_2Fe^{2+}{}_3Fe^{3+}{}_2Si_8O_{22}(OH)_2$, $Mg_2SiO_4$, $KV_2(AlSi_3O_{10})(OH)_2$, $(K,Na)AlSi_3O_8$, $(Mg, Fe)_3(Al, Si)_4O_{10}(OH)_2(Ca_{0.5},Na)_{0.3}{\cdot}4H_2O$, $CaWo_4$, $CaAl_2Si_3O_{10}{\cdot}3H_2O$, $(Fe,Mg)Al_2(PO_4)_2(OH)_2$, $Cu_5(SiO_3)_4(OH)_2$, $FeCO_3$, $Al_2SiO_5$, $Mg(Al,Fe)BO_4$, $ZnCO_3$, $LiAlSi_2O_6$, $Cu_2FeSnS_4$, $Fe_2Al_9O_6(SiO_4)_4(O,OH)_2$, $Sb_2O_3$, $NaCa_2Al_5Si_{13}O_{35}{\cdot}14H_2O$, $PbWo_4$, $SrCO_3$, $(Au,Ag)Te_2$,

$(Fe,Mn)Ta_2O_6$, CuO, $Mn_2SiO_4$, $ThSiO_4$, $Na_2B_4O_5(OH)_4{\cdot}3H_2O$, $CaTiO(SiO_4)$, $Al_2SiO_4(F,OH)_2$, $Cu(UO_2)_2(PO_4)_2{\cdot}$8-12$H_2O$, $(Na,Ca)(Li,Mg,Al)(Al, Fe,Mn)_6(BO_3)_3(Si_6O_{18})(OH)_4$, $Ca_2Mg_5Si_8O_{22}(OH)_2$, $CuAl_6(PO_4)_4(OH)_8{\cdot}5H_2O$, $Ca(UO_2)_2(VO_4)_2{\cdot}$5-8.5$H_2O$, $NaCaB_5O_6(OH)_6{\cdot}5H_2O$, $Pb_5(VO_4)_3Cl$, $Al(PO_4){\cdot}2H_2O$, $(Mg, Ca)_{0.3}(Mg, Fe,Al)_{3.0}(Al, Si)_4O_{10}(OH)_4{\cdot}8H_2O$, $Ca_{10}(Mg, Fe)_2Al_4(SiO_4)_5(Si_2O_7)_2(OH)_4$, $Fe_3(Po_4)_2{\cdot}8H_2O$, $Al_3(PO_4)_2(OH)_3{\cdot}5H_2O$, $Zn_2SiO_4$, $BaCO_3$, $(Fe, Mn)WO_4$, $CaSiO_3$, $PbMoO_4$, ZnS, Ca $(Mg,Al)_{3-2}(Al_2Si_2O_{10})(OH)_2$, $(Mg,Al,Fe^{3+})_8Si_4(O,OH)_2O$, ZnO, $ZrSiO_4$, and $Ca_2Al_3O(SiO_4)(Si_2O_7)$ (OH).
The above inorganic compounds can be used singly or as a mixture of two or more kinds.

Of the above compounds, preferable are SiC, ZnS, $As_2Se_3$, $LiNbO_3$, $TiO_2$, $SnO_2$, $BaTiO_3$, BeO, $MgF_2$ and

$KH_2PO_4$, and particularly preferable are $TiO_2$ of rutile type, $SnO_2$ doped with antimony and $Al_2O_3$ of corundum, as the compounds exhibiting conspicuous birefringence and having a relationship between the particle shape and the refractive index satisfying the aforesaid condition.

As the particles containing the above inorganic compound as a main component, pulverizates of the following inorganic minerals are also employable provided that they become inorganic particles having both of the aforesaid shape anisotropy and birefringence.

That is to say, there can be mentioned:

sulfide minerals, such as iron pyrite, copper pyrite, cinnabar, bornite, realgar and orpiment;
oxide minerals, such as spinel, corundum, hematite, rutile, chrysoberyl and opal;
quartz, such as quartz crystal, rose quartz, jasper and chalcedony;
halide minerals, such as fluorite, cryolite and halite;
carbonate minerals, such as calcite, aragonite, rhodochrosite, malachite and azurite;
sulfate minerals, such as barite, celestite, gypsum and anglesite;
phosphate minerals, such as turquois, variscite, apatite and strengite;
arsenate minerals, such as adamite;
silicate minerals, such as chrysolite, garnet, topaz, zircon, cyanite, andalusite, datolite, epidote, zoisite, vesuvianite, beryl, tourmaline, dioptase, cordierite, axinite, benitoite, diopside, spodumene, jade, tremolite, riebeckite, rhodonite, fibrolite, talc, chrysocolla, muscovite, biotite, lithia mica, prehnite, apophyllite, serpentine, lazurite and sodalite;
feldspars, such as potassium feldspar, plagioclase and albite;
zeolites, such as analcite, chabazite, heulandite, stilbite, natrolite and laumontite;
tungstate minerals; molybdenum minerals; borate minerals; and vanadate minerals.

By using the above inorganic mineral as a main material or by mixing it with another component when needed, the inorganic particles (B) having both of the aforesaid shape anisotropy and birefringence can be also prepared through various processes, such as a melt process wherein single crystals are grown from a melt of the material by CZ method, FZ method, Skull melt method, Bernoulli's method, Bridgman's method or the like, a solution process wherein the material is dissolved in water as a solvent and single crystals are grown from the solution, a process wherein crystal growth is carried out by flux method using a fused inorganic substance, such as lead oxide, lead fluoride, molybdenum oxide, tungsten oxide, boron oxide or vanadium oxide, as a solvent instead of water, a hydrothermal process mainly used for quartz, a vapor phase process such as CVD or PVD, and a sol-gel process.

Although the structure of the inorganic particles (B) is not specifically restricted provided that the inorganic particles have both of the aforesaid shape anisotropy and birefringence, crystalline structure is preferable to non-crystalline structure because the particles of crystalline structure are likely to exhibit birefringence, and single crystals are particularly preferable. By the use of such crystalline inorganic particles (B), birefringence of the resulting retardation film can be efficiently exhibited with high precision. The crystal system is not specifically restricted either, provided that the inorganic particles have both of the aforesaid shape anisotropy and birefringence, and any of triclinic, monoclinic, orthorhombic, rhombohedral, tetragonal, hexagonal and cubic systems is available.

The inorganic particles (B) are contained in amounts of usually 0.001 to 10 parts by weight, preferably 0.01 to 5 parts by weight, particularly preferably 0.1 to 1 part by weight, based on 100 parts by weight of the cycloolefin resin. When the content of the inorganic particles (B) is in the above range, birefringence of the resulting retardation film becomes excellent.

In order to enhance dispersibility and adhesion property of the inorganic particles (B) in the cycloolefin resin, the inorganic particles (B) may be subjected to surface treatment with a treating agent such as a coupling agent. The "surface treatment" referred to herein means an operation of mixing the inorganic particles (B) with a surface-treating agent to modify surfaces of the particles. For the surface treatment, any of a method of allowing the inorganic particles (B) to physically adsorb the surface-treating agent and a method of chemically bonding the surface-treating agent to the inorganic particles (B) is employable, but from the viewpoint of surface treatment effect, the method of chemical bonding is preferably employed.

Examples of the surface-treating agents include:

isopropyl triisostearoyl titanate, titanium n-butoxide, titanium ethoxide, titanium 2-ethylhexyloxide, titanium isobutoxide, titanium isopropoxide, titanium methoxide, titanium methoxypropoxide, titanium n-nonyloxide, titanium n-propoxide, titanium stearyl oxide, triisopropoxyheptadecynatotitanium;
compounds having an unsaturated double bond in a molecule, such as γ-methacryloxypropyltrimethoxysilane, γ-acryloxypropyltrimethoxysilane and vinyltrimethoxysilane;
compounds having an epoxy group in a molecule, such as γ-glycidoxypropyltriethoxysilane and γ-glycidoxypropyltrimethoxsilane;

compounds having an amino group in a molecule, such as γ-aminopropyltriethoxysilane and γ-aminopropyltrimethoxysilane;
compounds having a mercapto group in a molecule, such as γ-mercaptopropyltriethoxysilane and γ-mercaptopropyltrimethoxysilane;
alkylsilanes, such as methyltrimethoxysilane, methyltriethoxysilane and phenyltrimethoxysilane; and
other coupling agents, such as tetrabutoxytitanium, tetrabutoxyzirconium and tetraisopropoxyaluminum.

The above coupling agents can be used singly or as a mixture of two or more kinds.

Examples of the commercially available coupling agents include A-1100, A-1102, A-1110, A-1120, A-1122, y-9669, A-1160, AZ-6166, A-151, A-171, A-172, A-174, Y-9936, AZ-6167, AZ-6134, A-186, A-187, A-189, AZ-6129, A-1310, AZ-6189, A-162, A-163, AZ-6171, A-137, A-153, A-1230, A-1170, A-1289, Y-5187, A-2171 and Y-11597 from Nippon Unicar Co., Ltd.; and SH6020, SH6023, SH6026, SZ6030, SZ6032, AY-43-038, SH6040, SZ6050, SH6062, SH6076, SZ6083 and SZ6300 from Dow Corning Toray Silicon Co., Ltd.

The surface-treating agent is desirably added in an amount of usually 0.1 to 20 parts by weight, preferably 0.5 to 10 parts by weight, more preferably 1 to 5 parts by weight, based on 100 parts by weight of the inorganic particles (B). If the amount of the surface-treating agent added is less than the lower limit of the above range, surface treatment effect is not sufficiently exhibited occasionally. If the amount of the surface-treating agent added exceeds the upper limit of the above range, an unreacted surface-treating agent remains in a large amount, and phase difference stability and mechanical strength of the resulting retardation film sometimes become insufficient.

Transparent film

The retardation film of the invention is formed by mixing the inorganic particles (B) with the cycloolefin resin to form, for example, a transparent film and then subjecting the film to stretching or the like to orientate the inorganic particles (B). By controlling a stretch ratio, etc., birefringence of the retardation film can be easily controlled.

The transparent film for use in the invention can be obtained by molding a resin composition comprising the cycloolefin resin (A) and the inorganic particles (B) through melt molding or solution casting (solvent casting). The inorganic particles (B) may be dispersed in advance in the cycloolefin resin, or may be added and dispersed in the production of the transparent film. For dispersing the inorganic particles (B) in advance in the cycloolefin resin, a method of dispersing them in a molten state of the resin using a single-screw or twinscrew melt-kneading machine and a method of dispersing them in a solution state of the resin are available. Of these, the method of dispersing the particles in a solution state is preferable because dispersibility of the inorganic particles is more improved. In order to further stabilize the dispersed state of the inorganic particles, it is preferable from the viewpoint of productivity that in the production of an inorganic particle (B)-containing transparent film by solution casting, the inorganic particles are dispersed in a solution of the resin and the solution is used as it is. By taking this means, not only dispersibility of the inorganic particles (B) but also uniformity of film thickness and surface smoothness of the film become much more excellent.

The process for obtaining the transparent film by solvent casting is not specifically restricted, and a publicly known process is adoptable. For example, a process comprising dissolving or dispersing the resin composition in a solvent to give a solution of an appropriate concentration, pouring or applying the solution onto an appropriate carrier, drying the coating film and then peeling the dried film from the carrier is available.

Various conditions in the process for obtaining the transparent film by solvent casting are described below, but the invention is not limited to those conditions.

When the resin composition is dissolved or dispersed in a solvent, the concentration of the composition is set in the range of usually 0.1 to 90% by weight, preferably 1 to 50% by weight, more preferably 10 to 35% by weight. If the concentration is less than the lower limit of the above range, it becomes difficult to secure a thickness of the film. Further, there sometimes occurs another problem that surface smoothness of the film is hardly obtained because of foaming accompanying solvent evaporation or the like. On the other hand, if the concentration exceeds the upper limit of the above range, solution viscosity becomes too high and the resulting cycloolefin resin film hardly has uniform thickness or uniform surface.

The viscosity of the solution at room temperature is in the range of usually 1 to 1,000,000 mPa·s, preferably 10 to 100,000 mPa·s, more preferably 100 to 50,000 mPa·s, particularly preferably 1,000 to 40,000 mPa·s.

Examples of the solvents used herein include aromatic solvents, such as benzene, toluene and xylene; cellosolve solvents, such as methyl cellosolve, ethyl cellosolve and 1-methoxy-2-propanol; ketone solvents, such as diacetone alcohol, acetone, cyclohexanone, methyl ethyl ketone and 4-methyl-2-pentanone; ester solvents, such as methyl lactate and ethyl lactate; cycloolefin solvents, such as cyclohexanone, ethylcyclohexanone and 1,2-dimethylcyclohexane; halogen-containing solvents, such as 2,2,3,3-tetralfuoro-1-propanol, methylene chloride and chloroform; ether solvents, such as tetrahydrofuran and dioxane; and alcohol solvents, such as 1-pentanol and 1-butanol.

Also by using, instead of the above solvent, a solvent having a solubility parameter (SP value) of preferably

10 to 30 ($MPa^{1/2}$), more preferably 10 to 25 ($MPa^{1/2}$), particularly preferably 15 to 25 ($MPa^{1/2}$), most preferably 15 to 20 ($MPa^{1/2}$), an inorganic particle (B)-containing transparent film having excellent surface uniformity and excellent optical properties can be obtained.

The solvents mentioned above can be used singly or as a mixture of plural kinds. When the mixture (mixed solvent) is used, the SP value of the mixed solvent is preferably in the above range. The SP value of the mixed solvent can be estimated from weight ratios of the solvents, and in case of a mixture of two kinds of solvents (solvent 1 and solvent 2), the SP value of the mixed solvent can be determined by the following formula with the proviso that the weight fractions of the solvent 1 and the solvent 2 are taken as $W_1$ and $W_2$, respectively, and the SP values thereof are taken as $SP_1$ and $SP_2$, respectively.

$$\text{SP value} = W_1 \cdot SP_1 + W_2 \cdot SP_2$$

For producing the transparent film by solvent casting, a process comprising applying the aforesaid solution onto a substrate, e.g., a metallic drum, a steel belt, a polyester film such as a film of polyethylene terephthalate (PET) or polyethylene naphthalate (PEN), or a Teflon (trademark) belt, by means of a die or a coater, then drying the coating film and peeling the dried film from the substrate is available. The transparent film can be obtained also by a process comprising applying the solution onto a substrate by means of spraying, brushing, roll spin coating, dipping or the like, then drying the resulting coating film and peeling the dried film from the substrate. The thickness or the surface smoothness can be controlled by applying the solution repeatedly.

Drying of the coating film in the solvent casting process is not specifically restricted and can be carried out by a method generally used, such as a method of passing the coating film in an oven through many rollers. If bubbles are formed with evaporation of the solvent in the drying step, film properties are markedly lowered, and in order to avoid this, it is preferable to provide two or more drying steps and to properly control a temperature and an air flow in each drying step.

The amount of a residual solvent in the transparent film is usually not more than 10% by weight, preferably not more than 5% by weight, more preferably not more than 1% by weight, particularly preferably not more than 0.5% by weight. If the amount of the residual solvent exceeds the upper limit of the above range, dimensional change of the cycloolefin resin film with time is sometimes increased. By the residual solvent, moreover, Tg is lowered and heat resistance is also lowered.

In order to favorably carry out the later-described stretching, the transparent film sometimes needs to contain a slight amount of a residua solvent. More specifically, in order to obtain a film that exhibits phase difference stably and uniformly by stretch orientation, the amount of the residual solvent is sometimes adjusted to usually 10 to 0.1% by weight, preferably 5 to 0.1% by weight, more preferably 1 to 0.1% by weight. By allowing the solvent to remain in a slight amount, stretching operation is sometimes facilitated, and control of occurrence of phase difference is sometimes facilitated.

The thickness of the transparent film is in the range of usually 1 to 500 μm, preferably 10 to 300 μm, more preferably 30 to 100 μm. If the film thickness is less than the lower limit of the above range, handling of the film becomes substantially difficult. On the other hand, if the film thickness exceeds the upper limit of the above range, it becomes difficult to take up the film in the form of a roll, and light transmittance is sometimes lowered.

Retardation film

The retardation film of the invention can be obtained by orientating the inorganic particles (B) in the transparent film obtained by the above process. Orientation of the inorganic particle (B) can be carried out by, for example, stretching the transparent film. As a method of stretching the film, for example, publicly known monoaxial stretching or biaxial orientation is employable. That is to say, crosswise monoaxial stretching by tentering, compression stretching between rolls, lengthwise monoaxial stretching using rolls of different circumferences, biaxial orientation using a combination of crosswise monoaxial stretching and lengthwise monoaxial stretching, stretching by inflation, etc. are employable.

In case of monoaxial stretching, the stretching rate is in the range of usually 1 to 5,000%/min, preferably 50 to 1,000%/min, more preferably 100 to 1,000%/min, particularly preferably 100 to 500%/min.

In case of biaxial orientation, there are a method wherein stretching is carried out in two directions simultaneously and a method wherein after monoaxial stretching, stretching is carried out in a different direction from the direction of the initial stretching. In these methods, the intersection angle between the two stretch axes is usually in the range of 120 to 60 degrees. The stretching rates in the two directions may be the same or different and are each in the range of usually 1 to 5,000%/min, preferably 50 to 1,000%/min, more preferably 100 to 1,000%/min, particularly preferably 100 to 500%/min.

The stretching temperature is not specifically restricted. However, on the basis of the glass transition temperature (Tg) of the cycloolefin resin, the stretching temperature is usually Tg±30°C, preferably Tg±10°C, more preferably Tg-5 to Tg+10°C. By setting the stretching temperature in the above range, occurrence of non-uniformity of phase difference can be inhibited, and control of index ellipsoid is facilitated.

The stretch ratio is not specifically restricted because it is determined by the desired properties. However, the stretch ratio is in the range of usually 1.01 to 10 times, preferably 1.1 to 5 times, more preferably 1.1 to 3 times. If the stretch ratio exceeds 10 times, control of phase difference sometimes becomes difficult. In case of biaxial orientation, a difference between the stretch ratios in the two directions is in the range of preferably 0.01 to 8 times, more preferably 0.1 to 3 times, particularly preferably 0.1 to 1 time.

Although the stretched film may be cooled as it is, it is preferable to allow the stretched film to stand still in an atmosphere of a temperature of Tg-20°C to Tg for not shorter than 10 seconds, preferably 30 seconds to 60 minutes, more preferably 1 minute to 60 minutes. By virtue of this, a retardation film that rarely suffers change of phase difference property with time and is stable can be obtained.

The linear expansion coefficient of the retardation film in the temperature range of 20 to 100°C is preferably not more than $1\times10^{-4}$ (1/°C), more preferably not more than $9\times10^{-5}$ (1/°C), particularly preferably not more than $8\times10^{-5}$ (1/°C), most preferably not more than $7\times10^{-5}$ (1/°C). A difference in linear expansion coefficient between the stretching direction and the direction perpendicular to the stretching direction is preferably not more than $5\times10^{-5}$ (1/°C), more preferably not more than $3\times10^{-5}$ (1/°C), particularly preferably not more than $1\times10^{-5}$ (1/°C). When the linear expansion coefficient of the retardation film is in the above range, change of phase difference of transmitted light caused by change of stress due to temperature and humidity in the use of the retardation film can be restrained, and adhesion to a glass or the like is favorably maintained, so that the retardation film has stable optical properties over a long period of time.

In the film stretched in the above manner, molecules of the cycloolefin resin are orientated by the stretching, and with the orientation, most of the inorganic particles (B) are laid down in parallel to the film plane, that is, the longer diameter direction of the inorganic particles (B) is made substantially parallel to the film plane. The longer diameter direction of the inorganic particles (B) in the film plane can be controlled by stretch ratios in the two directions in the biaxial orientation and a difference in stretch ratio between the two directions. That is to say, the longer diameter direction tends to point to the direction of a higher stretch ratio, and this tendency becomes stronger as the stretch ratio is increased. As a result, in addition to a difference in refractive index between the film plane directions (x direction and y direction, the x direction and the y direction intersect at right angles), a difference in refractive index between the film plane direction and the film thickness direction (z direction) is made in the retardation film, and thereby phase difference can be produced in the film thickness direction.

The phase difference-imparting property can be controlled by type, shape and content of the inorganic particles (B), phase difference value and stretch ratio of the film before stretching, stretching temperature, and film thickness after stretch orientation. That is to say, in the case where the thickness of the film before stretching is made constant, the absolute value of phase difference tends to become larger as the content of the inorganic particles (B) is increased or as the stretch ratio is increased, and therefore, by changing the content of the inorganic particles (B) and the stretch ratio, a retardation film of a desired phase difference value can be obtained.

In the retardation film of the invention obtained by the above process, a phase difference (R0) in the film in-plane direction at a light wavelength of 590 nm is in the range of usually 10 to 1000 nm, preferably 10 to 500 nm, more preferably 10 to 100 nm, and a phase difference (Rth) in the film thickness direction at a light wavelength of 590 nm is in the range of usually 10 to 1000 nm, preferably 30 to 500 nm, more preferably 50 to 300 nm. A phase difference in the film in-plane direction or a phase difference in the film thickness direction at a light wavelength of 400 to 700 nm is in the range of preferably 1.2 to 0.8, more preferably 1.1 to 0.9, particularly preferably 1.15 to 0.95, based on the corresponding value at a light wavelength of 590 nm. When the phase difference values are in the above ranges, excellent properties can be exhibited when the retardation film is used in a liquid crystal device.

## Retardation film having transparent conductive film

The retardation film of the invention may be a retardation film comprising the above-described retardation film and the later-described transparent conductive film. That is to say, on at least one surface of the above-described retardation film, a transparent conductive layer can be laminated.

As a material for forming the transparent conductive layer (transparent conductive film), a metal, such as Sn, In, Ti, Pb, Au, Pt or Ag, or an oxide of such a metal is generally employed. The transparent conductive film can be produced by forming a film of a simple substance of the metal on a substrate and if necessary oxidizing the film of the metal simple substance. Although a metal oxide layer may be formed by deposition as the conductive film from the beginning of film formation, it is also possible that a film of a metal simple substance or a film of a lower oxide is formed at the beginning of film formation and then the film is subjected to oxidation treatment, such as thermal oxidation, anodic oxidation or liquid phase oxidation, to make the film transparent.

The transparent conductive film may be formed by bonding a sheet, a film or the like having a transparent conductive layer to the aforesaid retardation film, or may be directly formed on the aforesaid retardation film by plasma polymerization, sputtering, vacuum deposition, plating, ion plating, spraying, electrolytic deposition or the like. Although the thickness of the transparent conductive film is properly determined according to the desired properties and is not specifically restricted, it is in the range of usually 10 to 10,000 angstroms, preferably 50 to 5,000 angstroms.
In the case where the transparent conductive layer is directly formed on the retardation film of the invention, an adhesive layer and an anchor coat layer may be formed between the retardation film and the transparent conductive film, when needed. The adhesive layer can be formed by the use of a heat-resistant resin, such as epoxy resin, polyimide, polybutadiene, phenolic resin or polyether ether ketone. The anchor coat layer can be formed by curing an anchor coating material containing an acrylic prepolymer, such as epoxy diacrylate, urethane diacrylate or polyester diacrylate, using a publicly known curing means such as UV curing or thermal curing.

Combination of retardation film and anti-reflection film

The retardation film of the invention may be used after an anti-reflection film is formed on the retardation film. By the use of the retardation film and the anti-reflection film in combination, anti-reflection effect is obtained and light transmittance is increased. A composition for forming the anti-reflection film (referred to as an "anti-reflection film-forming composition" hereinafter) preferably contains, for example, a fluorine-containing copolymer having a hydroxyl group and a curing compound having a functional group reactive to a hydroxyl group, and more preferably further contains a thermal acid generator and/or an organic solvent. The refractive index of the anti-reflection film is preferably controlled to be in the range of a square root value of the product of a refractive index of the retardation film in the film thickness direction and a refractive index of a medium (e.g., base) in contact with the retardation film to $\pm$10% of the square root value, and is more preferably controlled to be in the range of this square root value to $\pm$5% of the square root value. By controlling the refractive index of the anti-reflection film to be in the above range, light transmittance can be much more increased.

Polarizing plate

The polarizing plate of the invention is a polarizing plate obtained by laminating a protective film (a), a polarizing film (b) and a protective film (c) one upon another in this order, and the protective film (a) and/or the protective film (c) comprises the retardation film described above. On at least one surface of the polarizing plate of the invention, a transparent conductive layer can be also laminated, similarly to the retardation film, and in this case, an adhesive layer and an anchor coat layer may be also formed.
The polarizing film (b) for use in the invention is a film obtained by subjecting a film composed of, for example, polyvinyl alcohol (PVA) or a polymer obtained by formalating a part of PVA to various treatments, such as dyeing treatment with a dichroic substance comprising iodine or a dichroic dye, stretching treatment and crosslinking treatment, in appropriate order and manner, and natural light incident on the polarizing film is transmitted as linearly polarized light. A polarizing film having high light transmittance and excellent degree of polarization is particularly preferably used. The thickness of the polarizing film (b) is in the range of preferably 5 to 80 $\mu$m. However, the thickness is not limited thereto in the invention. As the polarizing film (b), a film other than the above PVA film may be used provided that it exhibits similar properties. For example, a film obtained by subjecting a film of a cycloolefin resin to various treatments, such as dyeing treatment, stretching treatment and crosslinking treatment, in appropriate order and manner may be used.
When the retardation film is used as one of the protective films (a) and (c), a film composed of a polymer that is excellent in transparency, mechanical strength, heat stability, moisture barrier property, etc. is preferably used as the other protective film. Examples of such films include cellulose films, such as films of diacetyl cellulose and triacetyl cellulose (TAC); polyester films, such as films of polyethylene terephthalate, polyethylene isophthalate and polybutylene terephthalate; acrylic resin films, such as films of polymethyl (meth)acrylate and polyethyl (meth)acrylate; polycarbonate films; polyether sulfone films; polysulfone films; polyimide films; and cycloolefin resin films. These films can be preferably produced by solution casting (casting method), melt molding or the like. The thickness of the protective film is in the range of usually 20 to 250 $\mu$m, preferably 30 to 100 $\mu$m.
Of the above films, films of cycloolefin resins are preferably used from the viewpoints that moisture resistance, heat resistance and optical properties of the polarizing plate can be further improved and adhesion to the polarizing plate is excellent.
On one or both surfaces of the polarizing plate of the invention, various functional layers can be further provided. Examples of the functional layers include a pressure-sensitive adhesive layer, an anti-glare layer, a hard coat layer, an anti-reflection layer, a half-reflection layer, a reflective layer, a light-accumulation layer, a diffusion layer and an electroluminescence layer. These functional layers can be provided in combination of two or more kinds, and for example, a combination of an anti-glare layer and an anti-reflection layer, a combination of a light-accumulation layer and a reflective

layer and a combination of a light-accumulation layer and a light diffusion layer are available. Combinations of the functional layers are not limited these examples.

Process for producing polarizing plate

The polarizing plate of the invention can be produced by laminating the polarizing film (b) and the protective films (a) and (c) by a publicly known means. In the present invention, at least one of the protective films (a) and (c) has only to be the retardation film. For laminating the polarizing film (b) and the protective films (a) and (c), an adhesive or a bonding agent can be used. As the adhesive or the bonding agent, one having excellent transparency is preferable, and examples of such adhesives or bonding agents include adhesives of natural rubber, synthetic rubber, vinyl acetate/vinyl chloride copolymer, polyvinyl ether, acrylic resin and modified polyolefin resin; curing adhesives obtained by adding a curing agent such as an isocyanate group-containing compound to the above resins having a functional group such as hydroxyl group or amino group; polyurethane adhesives for dry lamination; synthetic rubber adhesives; and epoxy adhesives.

EXAMPLES

The present invention is further described with reference to the following examples, but it should be construed that the invention is in no way limited to those examples. Unless otherwise noted, the terms "part(s)" and "%" mean "part (s) by weight" and "% by weight", respectively.

First, methods for measuring property values and methods for evaluating properties are described.

(1) Total light transmittance, Haze value

Total light transmittance and haze value were measured by the use of a haze meter HGM-2DP model manufactured by Suga Test Instruments Co., Ltd.

(2) Phase difference of retardation film in the film in-plane direction and phase difference thereof in the film thickness direction

Using an automatic birefringence meter KOBRA-21ADH manufactured by Oji Scientific Instruments and using an average refractive index of a composition, three-dimensional refractive indexes Nx, Ny and Nz of a retardation film at a wavelength of 590 nm were determined. A phase difference of the retardation film in the film in-plane direction and a phase difference thereof in the film thickness direction were calculated from the following formulas.

Phase difference in the film in-plane direction:

$$(Nx-Ny) \times d$$

Phase difference in the film thickness direction:

$$[\{(Nx-Ny)/2\}-Nz] \times d$$

In the above formulas, Nz is a maximum refractive index in the film in-plane direction, Ny is a refractive index in the film in-plane direction and in the direction crossing the Nx at right angles, Nz is a refractive index in the film thickness direction, and d is a film thickness.

(3) Photoelasticity constant

Photoelasticity constant ($C_P$) was calculated using values of phase differences occurring when several kinds of prescribed loads were applied to a strip film sample at room temperature (25°C) and values of stresses received by the sample at that time.

(4) Particle dispersibility in retardation film

A section of a retardation film was observed under an electron microscope. A retardation film free from occurrence of void inside the film and free from marked aggregation of fine particles was judged as a retardation film having excellent particle dispersibility.

(5) Durability test

A retardation film was held in the environment of a temperature of 80°C for 1000 hours.

(6) Transmittance and degree of polarization of polarizing plate

Transmittance and degree of polarization of a polarizing plate were measured by the use of an automatic birefringence meter KOBRA-21ADH manufactured by Oji Scientific Instruments.

(7) Film thickness

Film thickness was measured by the use of a micrometer in accordance with JIS K7130.

Synthesis Example of cycloolefin resin

In a reaction vessel purged with nitrogen, 250 parts of 8-methyl-8-carboxymethyltetracyclo[4.4.0.$1^{2,5}$.$1^{7,10}$]-3-dodecene, 18 parts of 1-hexene (molecular weight modifier) and 750 parts of toluene were placed, and the solution was heated to 60°C. Subsequently, to the solution in the reaction vessel were added, as polymerization catalysts, 0.62 part of a toluene solution of triethylaluminum (1.5 mol/l) and 3.7 parts of a toluene solution (concentration: 0.05 mol/l) of tungsten hexachloride modified with t-butanol and methanol (t-butanol:methanol:tungsten = 0.35 mol:0.3 mol:1 mol), and the system was heated and stirred at 80°C for 3 hours to perform ring-opening copolymerization reaction, whereby a ring-opened copolymer solution was obtained. A polymerization conversion in this polymerization reaction was 97%, and the resulting ring-opened copolymer had an intrinsic viscosity ($\eta_{inh}$), as measured in chloroform at 30°C, of 0.75 dl/g.

In an autoclave, 4000 parts of the ring-opened copolymer solution obtained above were placed, then to the ring-opened copolymer solution was added 0.48 part of RuHCl (CO) $[P(C_6H_5)_3]_3$, and they were heated and stirred for 3 hours under the conditions of a hydrogen gas pressure of 100 kg/cm$^2$ and a reaction temperature of 165°C to perform hydrogenation reaction.

After the resulting reaction solution (hydrogenated polymer solution) was cooled, a hydrogen gas pressure was released. The reaction solution was poured into a large amount of methanol to separate solids, and the solids were collected and dried to obtain a hydrogenated polymer (specific cyclopolyolefin resin).

The hydrogenated polymer (referred to as a "resin (a-1)" hereinafter) obtained above was measured on the degree of hydrogenation by means of 400MHz$^1$H-NMR, and as a result, it was 99.9%.

A glass transition temperature (Tg) of the resin (a-1) was measured by DSC method, and as a result, it was 170°C. Further, a number-average molecular weight (Mn) and a weight-average molecular weight (Mw) (in terms of polystyrene) of the resin (a-1) were measured by GPC method (solvent: tetrahydrofuran, column: TSK-GEL H column available from Tosoh Corporation), and as a result, the number-average molecular weight (Mn) was 39,000, the weight-average molecular weight (Mw) was 137,000, and a molecular weight distribution (Mw/Mn) was 3.5.

Measurement of a water saturation-absorption of the resin (a-1) at 23°C resulted in 0.45%, and measurement of a SP value resulted in 19 (MPa$^{1/2}$).

Preparation Example 1

Preparation of rutile type needle-like titanium oxide particle dispersion (1)

10 Parts by weight of a rutile type needle-like titanium oxide fine powder (available from Ishihara Techno Corporation, trade name: TTO-S-4, length of longer diameter ($L_a$): 70 nm, ratio of length of longer diameter to length of shorter diameter ($L_a/D_b$): 5), 0.1 part by weight of polyethylene oxide (average degree of polymerization: about 300) and 100 parts by weight of toluene were mixed, and they were dispersed for 10 hours using glass beads. Thereafter, the glass beads were removed to obtain a rutile type needle-like titanium oxide particle dispersion (1).

Preparation Example 2

Preparation of needle-like tin oxide particle dispersion (2)

A needle-like tin oxide particle dispersion (2) was prepared in the same manner as in Preparation Example 1, except that a needle-like tin oxide fine powder (available from Ishihara Techno Corporation, trade name: FS-10P, length of longer diameter ($L_a$): 1000 nm, ratio of length of longer diameter to length of shorter diameter ($L_a/D_b$): 70) was used instead of the rutile type needle-like titanium oxide fine powder.

Preparation Example 3

Preparation of spherical titanium oxide particle dispersion (3)

A spherical titanium oxide particle dispersion (3) was prepared in the same manner as in Preparation Example 1, except that a spherical titanium oxide fine powder (available from Ishihara Techno corporation, trade name: TTO-51 (D), length of longer diameter ($L_a$): 40 nm, ratio of length of longer diameter to length of shorter diameter ($L_a/D_b$): 1.2) was used instead of the rutile type needle-like titanium oxide fine powder.

Preparation Example 4

Preparation of potassium titanate particle dispersion (4)

A potassium titanate particle dispersion (4) was prepared in the same manner as in Preparation Example 1, except that a potassium titanate fine powder (available from Otsuka Chemical Co., Ltd., trade name: Tismo N, length of longer diameter ($L_a$): 15 μm, ratio of length of longer diameter to length of shorter diameter ($L_a/D_b$): 30) was used instead of the rutile type needle-like titanium oxide fine powder.

Example 1

The resin (a-1) was dissolved in toluene so that the resulting solution should have a concentration of 30% (solution viscosity at room temperature: 30,000 Pa·s), then to the solution was added the particle dispersion (1) so that the amount of the rutile type needle-like titanium oxide particles should become 3 parts by weight based on 100 parts by weight of the resin, and pentaerythrityl tetrakis[3-(3,5-di-t-butyl-4-hydroxyphenyl)propionate] was further added in an amount of 0.1 part by weight based on 100 parts by weight of the resin. Then, the resulting solution was filtered through a metal fiber sintered filter (available from Nihon Pall Ltd.) having a pore size of 2.5 μm with controlling a flow rate of the solution so that the differential pressure should be not more than 1 MPa. Thereafter, by the use of an INVEX lab coater (manufactured by Inoue Metalworking Industry Co., Ltd.) placed in a Class 100 clean room, a PET film of 100 μm thickness (available from Toray Industries, Inc., Lumiler U94), which had been subjected to hydrophilic property-imparting (adhesion-facilitating) surface treatment with an acrylic acid-based surface-treating agent, was coated with the filtrate so that the dry film thickness should become 100 μm, followed by primary drying at 50°C and then secondary drying at 90°C. From the dried film thus obtained, the PET film was peeled off to obtain an optical film (a1). The amount of the residual solvent in the resulting optical film was 0.5%. The total light transmittances of this film were each not less than 90%. The number of luminescent spots of the optical film based on 1 $m^2$ of the film was 0. Measurement of a photoelasticity constant ($C_P$) of the optical film (a1) resulted in $C_P$=7 ($\times 10^{-12}$ $Pa^{-1}$).

The optical film (a1) was used as a raw film, and foreign matters adhering to the film surface were removed by the use of an adhesive roll. Thereafter, in a tenter in the environment of a cleanness of 100, the film was heated to 180°C (Tg+10°C) and stretched at a stretching rate of 300%/min in the lengthwise direction of the film in-plane direction in a stretch ratio of 1.15 times and then in the crosswise direction of the film in-plane direction in a stretch ratio of 1.20 times. Thereafter, the film was cooled with holding the film in an atmosphere of 150°C (Tg-20°C) for 1 minute, then further cooled to room temperature and taken out to obtain a retardation film (a2).

A retardation film (a3) was obtained in the same manner as above, except that the stretch ratio of the optical film (a1) in the lengthwise direction was changed to 1.20 times and the stretch ratio thereof in the crosswise direction was changed to 1.25 times.

Phase difference values in the film in-plane direction and phase difference values in the film thickness direction at a wavelength of 590 nm, film thickness and haze of the films (a1), (a2) and (a3) are set forth in Table 1.

The numbers of luminescent spots of the optical films (a2) and (a3) based on 1 $m^2$ of the film were each 0.

Phase difference values of the films after the durability test are also set forth in Table 1.

Example 2

An optical film (b1) was obtained in the same manner as in Example 1, except that the particle dispersion (2) was used instead of the particle dispersion (1). The total light transmittances of this film were each not less than 90%. Measurement of a photoelasticity constant ($C_P$) of the optical film (b1) resulted in $C_P$=7 ($\times 10^{-12}$ $Pa^{-1}$).
Further, a retardation film (b2) was obtained in the same manner as in Example 1, except that the optical film (b1) was stretched in the lengthwise direction in a stretch ratio of 1.20 times and in the crosswise direction in a stretch ratio of 1.25 times.
Phase difference values in the film in-plane direction and phase difference values in the film thickness direction at a wavelength of 590 nm, film thickness and haze of the films (b1) and (b2) are set forth in Table 1.
The numbers of luminescent spots of the optical films (b1) and (b2) based on 1 $m^2$ of the film were each 0.
Phase difference values of the films after the durability test are also set forth in Table 1.

Example 3

An optical film (e1) was obtained in the same manner as in Example 1, except that the particle dispersion (4) was used instead of the particle dispersion (1) and the solution was not filtered. The total light transmittances of this film were each not less than 90%. Measurement of a photoelasticity constant ($C_P$) of the optical film (e1) resulted in $C_P$=7 ($\times 10^{-12}$ $pa^{-1}$).
Further, a retardation film (e2) was obtained in the same manner as in Example 1, except that the optical film (e1) was stretched in the lengthwise direction in a stretch ratio of 1.20 times and in the crosswise direction in a stretch ratio of 1.25 times.
Phase difference values in the film in-plane direction and phase difference values in the film thickness direction at a wavelength of 590 nm, film thickness and haze of the films (e1) and (e2) are set forth in Table 1.
The numbers of luminescent spots of the optical films (e1) and (e2) based on 1 $m^2$ of the film were 15 and 17, respectively.
Phase difference values of the films after the durability test are also set forth in Table 1.

Comparative Example 1

An optical film (c1) was obtained in the same manner as in Example 1, except that the particle dispersion (1) was not used. The total light transmittances of this film were each not less than 90%. Measurement of a photoelasticity constant (Cp) of the optical film (c1) resulted in $C_p$=5 ($\times 10^{-12}$ $Pa^{-1}$).
Further, a retardation film (c2) was obtained in the same manner as in Example 1, except that the optical film (c1) was stretched in the lengthwise direction in a stretch ratio of 1.15 times and in the crosswise direction in a stretch ratio of 1.20 times.
Furthermore, a retardation film (c3) was obtained in the same manner as above, except that the optical film (c1) was stretched in the lengthwise direction in a stretch ratio of 1.20 times and in the crosswise direction in a stretch ratio of 1.25 times.
Phase difference values in the film in-plane direction and phase difference values in the film thickness direction at a wavelength of 590 nm, film thickness and haze of the films (c1), (c2) and (c3) are set forth in Table 1.
The numbers of luminescent spots of the optical films (c1), (c2) and (c3) based on 1 $m^2$ of the film were each 0. Phase difference values of the films after the durability test are also set forth in Table 1.

Comparative Example 2

An optical film (d1) was obtained in the same manner as in Example 1, except that the particle dispersion (3) was used instead of the particle dispersion (1). The total light transmittances of this film were each not less than 90%. Measurement of a photoelasticity constant (Cp) of the optical film (d1) resulted in $C_P$=5 ($\times 10^{-12}$ $Pa^{-1}$).
Further, a retardation film (d2) was obtained in the same manner as in Example 1, except that the optical film (d1) was stretched in the lengthwise direction in a stretch ratio of 1.20 times and in the crosswise direction in a stretch ratio of 1.25 times.
Phase difference values in the film in-plane direction and phase difference values in the film thickness direction at a wavelength of 590 nm, film thickness and haze of the films (d1) and (d2) are set forth in Table 1.
The numbers of luminescent spots of the optical films (d1) and (d2) based on 1 $m^2$ of the film were each 0.
Phase difference values of the films after the durability test are also set forth in Table 1.

Comparative Example 3

A polycarbonate optical film (f1) was obtained in the same manner as in Example 1, except that polycarbonate A2700 (available from Idemitsu Petrochemical Co., Ltd., Tg=150°C) was used instead of the resin (a-1), methylene chloride was used instead of toluene, and the particle dispersion (1) was not used. The total light transmittances of this film were each not less than 90%. Property values of the resulting polycarbonate film are set forth in Table 1. Measurement of a photoelasticity constant (Cp) of the optical film (f1) resulted in $C_P$=150 (×$10^{-12}$ $Pa^{-1}$).

Further, a retardation film (f2) was obtained in the same manner as in Example 1, except that the optical film (f1) was used as a raw film and this film was stretched at a stretching temperature of 160°C (Tg+10°C) in the lengthwise direction in a stretch ratio of 1.1 times and in the crosswise direction in a stretch ratio of 1.15 times. A phase difference value in the film in-plane direction and a phase difference value in the film thickness direction at a wavelength of 590 nm, film thickness and haze of the retardation film (f2) are set forth in Table 1.

The numbers of luminescent spots of the optical films (f1) and (f2) based on 1 $m^2$ of the film were each 0.

Phase difference values of the films after the durability test are also set forth in Table 1.

Table 1

| | Type of film | Resin Inorganic particles | Stretching conditions |
|---|---|---|---|
| Ex. 1 | Optical film a1 | cyclopolyolefin resin needle-like titanium oxide particles | |
| | Stretched film a2 | | lengthwise: 1.15 times crosswise: 1.20 times |
| | Stretched film a3 | | lengthwise: 1.20 times crosswise: 1.25 times |
| Ex. 2 | Optical film b1 | cyclopolyolefin resin needle-like tin oxide particles | |
| | Stretched film b2 | | lengthwise: 1.20 times crosswise: 1.25 times |
| Ex. 3 | Optical film e1 | cyclopolyolefin resin potassium titanate particles | |
| | Stretched film e2 | | lengthwise: 1.20 times crosswise: 1.25 times |
| Comp. Ex. 1 | Optical film c1 | cyclopolyolefin resin inorganic particles: none | |
| | Stretched film c2 | | lengthwise: 1.15 times crosswise: 1.20 times |
| | Stretched film c3 | | lengthwise: 1.20 times crosswise: 1.25 times |
| Comp. Ex. 2 | Optical film d1 | cyclopolyolefin resin spherical titanium oxide particles | |
| | Stretched film d2 | | lengthwise: 1.20 times crosswise: 1.25 times |
| Comp. Ex. 3 | Optical film f1 | polycarbonate inorganic particles: none | |
| | Stretched film f2 | | lengthwise: 1.1 times crosswise: 1.15 times |

Table 1 (continued)

| | Thickness (μm) | Haze (%) | In-plane phase difference value (nm) | | Thickness direction phase difference value (nm) | |
|---|---|---|---|---|---|---|
| | | | Before durability test | After durability test | Before durability test | After durability test |
| Ex. 1 | 100 | 0.8 | 2 | 2 | 40 | 40 |
| | 68 | 0.9 | 60 | 60 | 250 | 250 |
| | 60 | 0.9 | 65 | 65 | 320 | 320 |
| Ex. 2 | 100 | 1.2 | 2 | 2 | 38 | 38 |
| | 68 | 1.3 | 62 | 62 | 260 | 260 |
| Ex. 3 | 100 | 10.3 | 2 | 2 | 38 | 38 |
| | 60 | 12.6 | 55 | 55 | 180 | 180 |
| Comp. Ex. 1 | 100 | 0.6 | 1 | 1 | 35 | 35 |
| | 68 | 0.7 | 40 | 40 | 80 | 80 |
| | 60 | 0.7 | 40 | 40 | 120 | 120 |
| Comp. Ex. 2 | 100 | 1.0 | 1 | 1 | 35 | 35 |
| | 60 | 1.2 | 40 | 40 | 120 | 120 |
| Comp. Ex. 3 | 100 | 0.7 | 3 | 2 | 55 | 58 |
| | 85 | 0.8 | 60 | 40 | 250 | 220 |

Example 4

(1) Preparation of water-based adhesive

In a reaction vessel, 250 parts of distilled water were placed, then 90 parts of butyl acrylate, 8 parts of 2-hydroxyethyl methacrylate, 2 parts of divinylbenzene and 0.1 part of potassium oleate were added, and they were stirred and dispersed by a stirring blade made of Teflon (registered trademark). After the reaction vessel was purged with nitrogen, the system was heated up to 50°C, and 0.2 part of potassium persulfate was added to initiate polymerization. After a lapse of 2 hours, 0.1 part of potassium persulfate was further added, then the system was heated up to 80°C, and the polymerization reaction was continued over a period of 1 hour to obtain a polymer dispersion. Subsequently, the polymer dispersion was concentrated by the use of an evaporator until the solids concentration became 70%, whereby a water-based adhesive (adhesive having polar group) composed of a water-based dispersion of an acrylic ester polymer was obtained. A number-average molecular weight (Mn) and a weight-average molecular weight (Mw) (in terms of polystyrene) of the acrylic ester polymer were measured by GPC method (solvent: tetrahydrofuran), and as a result, Mn was 69000 and Mw was 135000. Further, an intrinsic viscosity ($\eta_{inh}$) of the water-based adhesive at 30°C in chloroform was measured, and as a result, it was 1.2 dl/g.

(2) Preparation of polarizing plate

Polyvinyl alcohol (referred to as "PVA" hereinafter) was pre-stretched in a stretch ratio of 3 times in a dyeing bath of an aqueous solution having an iodine concentration of 0.03% by weight and a potassium iodide concentration of 0.5% by weight at 30°C, then post-stretched in a stretch ratio of 2 times in a crosslinking bath of an aqueous solution having a boric acid concentration of 5% by weight and a potassium iodide concentration of 8% by weight at 55°C and then dried to obtain a polarizer.

Subsequently, the optical film (a1) was laminated on one surface of the polarizer with the water-based adhesive, and the retardation film (a2) was laminated on the other surface of the polarizer with a PVA adhesive to obtain a polarizing plate (a4). Measurements of a transmittance and a degree of polarization of the polarizing plate (a4) resulted in 44.0% and 99.9%, respectively. In this step, the operation was carried out in the environment of a cleanness of 1000, and prior to the lamination, removal of foreign matters adhering was carried out using an adhesive roll. Further, the optical axis (retarded phase axis) of the in-plane phase difference of each film and the light transmission axis of the polarizer were

made parallel to each other.

The number of luminescent spots of the film (a4) based on 1 $m^2$ of the film was 0.

Further, durability test of the polarizing plate (a4) was carried out, and as a result, changes in transmittance and degree of polarization were not observed.

Example 5

(1) Preparation of coating composition

In a reactor equipped with a reflux condenser and a stirrer, 25 parts of methyltrimethoxysilane, 10 parts of a dispersion of colloidal silica in methanol (solids concentration: 30%, available from Nissan chemical Industries, Ltd., methanol sol) and 6 parts of tap water were mixed, and the mixture was heated to 70°C, followed by performing reaction for 2 hours. Thereafter, 38 parts of i-propyl alcohol were added to obtain a coating composition.

(2) Preparation of polarizing plate

On one surface of the polarizing plate (a4) obtained in Example 3, SiNx was deposited in a film thickness of 80 nm under vacuum ($10^{-4}$ Torr), and thereon were further deposited TbFeCo in a film thickness of 20 nm, SiNx in a film thickness of 30 nm and Al as an outermost layer in a film thickness of 50 nm in this order to impart an anti-reflection function to the polarizing plate.

On the anti-reflection layer, the above-obtained coating composition was applied by an air spray gun so that the dry film thickness should become 5 μm and then heated at 140°C for 60 minutes to form a cured film, whereby a polarizing plate (a5) was obtained. Measurements of a transmittance and a degree of polarization of the polarizing plate (a5) resulted in 44.0% and 99.9%, respectively. In this step, the operation was carried out in the environment of a cleanness of 1000, and prior to the lamination, removal of foreign matters adhering was carried out using an adhesive roll.

Further, durability test of the polarizing plate (a5) was carried out, and as a result, changes in transmittance and degree of polarization were not observed.

Comparative Example 4

A polarizing plate (f3) was obtained in the same manner as in Example 4, except that the optical film (f1) was used instead of the optical film (a1) and the retardation film (f2) was used instead of the retardation film (a2). Measurements of a transmittance and a degree of polarization of the polarizing plate (f3) resulted in 41.0% and 99.9%, respectively.

Further, durability test of the polarizing plate (f3) was carried out, and as a result, a transmittance and a degree of polarization of the polarizing plate were 38.0% and 72.0%, respectively.

INDUSTRIAL APPLICABILITY

The retardation film and the polarizing plate of the invention have excellent phase difference property and transparency and can exhibit stable properties over a long period of time. Therefore, they can be used for various optical parts. For example, they can be used for various liquid crystal display devices, such as cellular phones, digital information terminals, pocket bells, navigation systems, on-vehicle liquid crystal displays, liquid crystal monitors, light modulation panels, displays for OA machines and displays for AV machines, electroluminescence display devices, and touch panels. Moreover, they are useful also as wavelength plates which are used in recording/reproducing apparatuses for optical discs, such as CD, CD-R, MD, MO and DVD.

## Claims

**1.** A retardation film comprising:

(A) a cycloolefin resin, and

(B) inorganic particles which have a longer diameter and a shorter diameter and exhibit shape anisotropy, a refractive index of which in the longer diameter direction is larger than an average refractive index of which in the direction crossing the longer diameter direction at right angles and which exhibit birefringence,

wherein the inorganic particles (B) are orientated, and the retardation film has a difference in refractive index between the film plane direction and the film thickness direction.

**2.** The retardation film as claimed in claim 1, wherein a phase difference (R0) in the film in-plane direction is in the range of 10 to 1000 nm.

**3.** The retardation film as claimed in claim 1, wherein a phase difference (Rth) in the film thickness direction is in the range of 10 to 1000 nm.

**4.** The retardation film as claimed in claim 1, wherein the inorganic particles (B) have crystalline property and have an average longer diameter of not more than 2 μm.

**5.** The retardation film as claimed in claim 1, wherein the inorganic particles (B) have crystalline property and have a ratio (L/D) of a longer diameter (L) to a shorter diameter (D) of not less than 2, and the longer diameter direction of the inorganic particles (B) is arranged in substantially parallel to the film plane.

**6.** The retardation film as claimed in claim 1, which is produced by stretching.

**7.** A retardation film comprising the retardation film of claim 1 and a transparent conductive film.

**8.** A polarizing plate obtained by laminating a protective film (a), a polarizing film (b) and a protective film (c) one upon another in this order, wherein the protective film (a) and/or the protective film (c) is the retardation film of claim 1.

**9.** A liquid crystal display device having the retardation film of claim 1.

**10.** A liquid crystal display device having the polarizing plate of claim 8.

**INTERNATIONAL SEARCH REPORT**

International application No.
PCT/JP2005/000254

A. CLASSIFICATION OF SUBJECT MATTER
Int.Cl$^{7}$ G02B5/30

According to International Patent Classification (IPC) or to both national classification and IPC

B. FIELDS SEARCHED

Minimum documentation searched (classification system followed by classification symbols)
Int.Cl$^{7}$ G02B5/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-090914 A (Teijin Ltd.), 28 March, 2003 (28.03.03), Full text (Family: none) | 1-10 |
| Y | JP 2001-208901 A (JSR Corp.), 03 August, 2001 (03.08.01), Full text; all drawings (Family: none) | 1-10 |
| Y | JP 2003-139951 A (Fuji Photo Film Co., Ltd.), 14 May, 2003 (14.05.03), Full text; all drawings (Family: none) | 1-10 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 February, 2005 (04.02.05) | 01 March, 2005 (01.03.05) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2005/000254

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-236968 A (Nippon Zeon Co., Ltd.), 26 August, 2003 (26.08.03), Full text; Fig. 1 (Family: none) | 7-10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4245202 A
- JP 2002355936 A
- JP 11293116 A
- JP 1132626 A
- JP 50154339 A


### Non-patent literature cited in the description


- *Polymer Journal,* 1995, vol. 27 (9), 943-950
- *Journal of Japan Rheological Society,* 1991, vol. 19 (2), 93-97